(19) Europäisches Patentamt / European Patent Office / Office européen des brevets

(11) **EP 2 978 216 B1**

(12) **EUROPÄISCHE PATENTSCHRIFT**

(45) Veröffentlichungstag und Bekanntmachung des Hinweises auf die Patenterteilung:
**16.08.2017 Patentblatt 2017/33**

(51) Int Cl.:
*H04N 5/232* $^{(2006.01)}$  *H04N 13/02* $^{(2006.01)}$
*H04N 5/369* $^{(2011.01)}$  *G01S 17/89* $^{(2006.01)}$

(21) Anmeldenummer: **14002572.7**

(22) Anmeldetag: **24.07.2014**

(54) **Verfahren zur Erkennung von Bewegungsunschärfe**

Method for the detection of motion blur

Procédé pour la détection du flou de mouvement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.01.2016 Patentblatt 2016/04**

(73) Patentinhaber: **Espros Photonics AG**
**7320 Sargans (CH)**

(72) Erfinder: **Huber, Dieter**
**8708 Männedorf (CH)**

(74) Vertreter: **Otten, Roth, Dobler & Partner mbB**
**Patentanwälte**
**Großtobeler Straße 39**
**88276 Berg / Ravensburg (DE)**

(56) Entgegenhaltungen:
**EP-A1- 2 477 043    WO-A1-2010/025331**

- **BÜTTGEN B ET AL: "Robust Optical Time-of-Flight Range Imaging Based on Smart Pixel Structures", IEEE TRANSACTIONS ON CIRCUITS AND SYSTEMS I: REGULAR PAPERS, IEEE, US, Bd. 55, Nr. 6, 1. Juli 2008 (2008-07-01), Seiten 1512-1525, XP011333148, ISSN: 1549-8328, DOI: 10.1109/TCSI.2008.916679**
- **GERALD ZACH ET AL: "A 16 X 16 Pixel Distance Sensor With In-Pixel Circuitry That Tolerates 150 klx of Ambient Light", IEEE JOURNAL OF SOLID-STATE CIRCUITS, IEEE SERVICE CENTER, PISCATAWAY, NJ, USA, Bd. 45, Nr. 7, 1. Juli 2010 (2010-07-01), Seiten 1345-1353, XP011312128, ISSN: 0018-9200, DOI: 10.1109/JSSC.2010.2048075**
- **SEONG-JIN KIM ET AL: "A CMOS Image Sensor Based on Unified Pixel Architecture With Time-Division Multiplexing Scheme for Color and Depth Image Acquisition", IEEE JOURNAL OF SOLID-STATE CIRCUITS, IEEE SERVICE CENTER, PISCATAWAY, NJ, USA, Bd. 47, Nr. 11, 1. November 2012 (2012-11-01), Seiten 2834-2845, XP011470530, ISSN: 0018-9200, DOI: 10.1109/JSSC.2012.2214179**
- **BUXBAUM B ET AL: "PMD-PLL: RECEIVER STRUCTURE FOR INCOHERENT COMMUNICATION AND RANGING SYSTEMS", PROCEEDINGS OF SPIE, S P I E - INTERNATIONAL SOCIETY FOR OPTICAL ENGINEERING, US, vol. 3850, 22 September 1999 (1999-09-22), pages 116-127, XP009013591, ISSN: 0277-786X, DOI: 10.1117/12.372813**

EP 2 978 216 B1

**Beschreibung**

Die Erfindung betrifft ein Verfahren zur Erkennung von Bewegungsunschärfe nach dem Oberbegriff des Anspruchs 1. Aus dem Stand der Technik sind herkömmliche Bewegungssensoren bekannt, etwa in Form von Änderungssensoren, bei denen üblicherweise ein konventionelles Pixel eingesetzt wird, wobei das Ausgangssignal mit einem Hochpass gefiltert wird (so genanntes AAC-gekoppeltes Pixel). Andere handelsübliche Bewegungssensoren nehmen zeitlich aufeinanderfolgend eine Serie von Bildern auf und führen eine pixelweise Subtraktion der aufgenommenen Bilder durch. Anschließend wird eine Auswertung der Subtraktionsergebnisse in Bezug auf Änderungen vorgenommen.

Aus der BÜTTGEN B ET AL: "Robust Optical Time-of-Flight Range Imaging Based on Smart Pixel Structures", IEEE TRANSACTIONS ON CIRCUITS AND SYSTEMS I: REGULAR PAPERS; IEEE; US; (Bd.55, Nr. 6,1. Juli 2008(2008-07-01), Seiten 1512-1525, XP011312148, ISSN: 1549-8328, DOI: 10.1109/TCSI.2008.916679) ist ein Videosensor bekannt, der nach dem Time-of-Flight-(ToF)-Prinzip arbeitet und über eine Empfangseinrichtung mit einer Pixelmatrix mit wenigstens zwei Demodulationspixeln sowie mit jeweils 2 Sammeleinheiten zur Sammlung erzeugter Ladungsträger verfügt. Ferner umfasst er eine Umschaltvorrichtung zum Umschalten zwischen den Sammeleinheiten sowie eine Differenzbildungsvorrichtung zur Bildung einer Differenz zwischen den in den Sammeleinheiten gespeicherten Ladungsträgern. Darüber hinaus ist aus der GERALD ZACH ET AL: "A 16 X 16 Pixel Distance Sensor With In-Pixel Circuitry That Tolerates 150 klx of Ambient Light", IEEE JOURNAL OF SOLID-STATE CIRCUITS; IEEE SERVICE CENTER; PISCATAWAY; NJ; USA; (Bd. 45, Nr. 7, 1. Juli 2010(2010-07-01), Seiten 1345-1353, XP011312128, ISSN: 0018-9200, DOI: 10.1109/JSSC.2010.2048075) ein Time-of-flight-Sensor bekannt, der wiederum einen On-Chip-A/D-Wandler aufweist.

Aufgabe der Erfindung ist es, einen Bildsensor vorzuschlagen, dessen Auswertung zur Erfassung einer Bewegung vereinfacht werden kann.

Die Aufgabe wird, ausgehend von einem Bildsensor der eingangs genannten Art, durch die Merkmale des Anspruchs 1 sowie hinsichtlich eines Verfahrens zur Bestimmung einer Bewegung und hinsichtlich eines Verfahrens zur Erkennung von Bewegungsunschärfe durch die kennzeichnenden Merkmale der Ansprüche 14 und 15 gelöst.

Durch die in den abhängigen Ansprüchen genannten Maßnahmen sind vorteilhafte Ausführungen und Weiterbildungen der Erfindung möglich.

Dementsprechend ist der erfindungsgemäße Bildsensor zur Erfassung einer Bewegung und/oder der Entfernung eines Objekts ausgebildet und kann für Überwachungsvorrichtungen eingesetzt werden. Der erfindungsgemäße Bildsensor ist insbesondere als Bewegungsbildsensor zur Erfassung einer Bewegung des Objektes ausgebildet. Der Bewegungsbildsensor kann zudem aber auch dazu eingesetzt werden, Reflexionsänderungen zu detektieren oder zum Beispiel eine Emissionsänderung einer Strahlungsquelle zu erfassen.

Der erfindungsgemäße Sensor umfasst zunächst eine Empfangseinrichtung zum Empfang von vom Objekt reflektierter Strahlung (Lichtstrahlung), wobei die eine Empfangseinrichtung eine Pixel-Matrix zur Aufnahme eines Pixel-Bildes ist.

Beim erfindungsgemäßen Bildsensor umfasst die Pixel-Matrix wenigstens zwei Demodulationspixel, insbesondere 2-Tap-Demodulationspixel zur Bilderfassung, welche dazu ausgebildet sind, die empfangene Strahlung in Ladungsträger umzuwandeln. Jedem Demodulationspixel sind mindestens zwei Sammeleinheiten zur Speicherung von zwei unterschiedlichen Bildern zugeordnet, wobei die Sammeleinheiten wiederum die erzeugten Ladungsträger sammeln. Die Sammeleinheiten können beispielsweise als sogenannte Storagegates ausgebildet sein. Die beiden unterschiedlichen Bilder werden beispielsweise in zeitlicher Reihenfolge aufeinanderfolgend aufgenommen, und die pro Bild erzeugten Ladungsträger des jeweiligen Pixels dann je nach Zeit der Aufnahme den einzelnen Sammeleinheiten zugewiesen.

Der erfindungsgemäße Bildsensor umfasst zusätzlich wenigstens eine Kontrolleinheit zur Kontrolle, das heißt zur Steuerung und/oder Regelung. Um zwischen den Sammeleinheiten umschalten zu können, ist beim erfindungsgemäßen Bildsensor eine Umschaltvorrichtung vorgesehen. Wenigstens eine der Kontrolleinheiten ist zur Kontrolle der Umschaltvorrichtung ausgebildet, um zwischen den Sammeleinheiten nach einer durch die Kontrolleinheit vorgegebenen Zeitspanne umschalten zu können, sodass nach Aufnahme eines Bildes und Speicherung der Ladungsträger in einer der Sammeleinheiten zur Aufnahme eines weiteren Bildes eine Umschaltung auf eine andere Sammeleinheit erfolgen kann. Hat die Umschaltvorrichtung beim erfindungsgemäßen Bildsensor von einer der Sammeleinheiten auf die nächste gewechselt und ist wieder eine entsprechende Zeitspanne verstrichen, so kann die Umschaltvorrichtung dann, wenn insgesamt zwei Sammeleinheiten vorgesehen sind, auf die vorangegangene Sammeleinheit wieder zurückschalten. Falls mehr Sammeleinheiten vorgesehen sind, so können diese von der Umschaltvorrichtung der Reihe nach ausgewählt werden.

Die in den Sammeleinheiten beim erfindungsgemäßen Bildsensor gespeicherten Ladungsträger entsprechen einem Grauwert. Wird beispielsweise nach einer gewissen Zeitspanne durch die Umschaltvorrichtung auf eine Sammeleinheit umgeschaltet, in der bereits Ladungsträger aus der Aufnahme eines zuvor aufgenommenen Bildes gespeichert sind, so werden die weiteren Ladungsträger zusätzlich in dieser Sammeleinheit gespeichert, das heißt die Grauwerte werden über die jeweiligen Zeitabschnitte, in denen die Umschaltvorrichtung auf die entsprechende Sammeleinheit umgeschaltet hat, aufintegriert. Ferner ist eine Differenzbildungsvorrichtung zur Bildung einer Differenz zwischen den in den Sammeleinheiten gespeicherten Ladungsträger und/oder dem den jeweiligen Ladungsträgern entsprechenden Werten vorgesehen

Die in den Sammeleinheiten gespeicherten Ladungsträger beinhalten also analoge Daten/Informationen, und auch das Ergebnis nach Bildung der Differenz durch die Differenzbildungsvorrichtung ist entsprechend eine analoge Information. Dieser analoge Differenzwert kann mittels eines A/D- (Analog-/Digital-) Wandlers zur Wandlung des von der Differenzbildungsvorrichtung gebildeten analogen Differenzwertes in einen digitalen Wert beim Bildsensor umgewandelt werden. Die Differenzbildungsvorrichtung ist erfindungsgemäß also dem A/D-Wandler vorgeschaltet.

Schließlich ist beim erfindungsgemäßen Bildsensor auch eine Auswerteeinheit zur Auswertung des vom A/D-Wandler ausgegebenen Differenzwertes vorgesehen.

Beim erfindungsgemäßen Bewegungsbildsensor sind die absoluten Grauwerte der aufgenommenen Bilder bzw. der aufgenommenen Pixel grundsätzlich für die Auswertung, ob eine Bewegung vorliegt, nicht relevant, sondern lediglich die zeitliche Änderung dieser Grauwerte. Beim erfindungsgemäßen Bildsensor können dementsprechend in den Sammeleinheiten bzw. Storagegates Grauwerte in Form von Ladungsträgern zu bestimmten Zeiten aufgenommen und gespeichert werden. Da die absoluten Grauwerte hier nicht von Bedeutung sind, sondern lediglich festgestellt werden muss, ob eine zeitliche Änderung erfolgt, kann auch eine Aufintegration über Grauwerte erfolgen, die über nicht zusammenhängende Zeitintervalle aufgenommen worden sind. Bei einem völlig statischen Bild muss die gebildete Differenz aus der Differenzbildungsvorrichtung den Wert Null ergeben. Ist dies nicht der Fall, so muss innerhalb der insgesamt beobachteten Zeit, in der zwischen den Sammeleinheiten umgeschaltet wurde, eine zeitliche Änderung eingetreten sein. Diese Änderung kann durch eine Bewegung im Bereich des aufgenommenen Bildes verursacht worden sein. Auf diese Weise kann der erfindungsgemäße Bildsensor die Bewegung eines Objektes erfassen.

Insbesondere bietet der erfindungsgemäße Bildsensor den Vorteil, dass er nicht nur vergleichsweise einfach ausgewertet werden kann, sondern zudem auch eine erhebliche Datenreduzierung ermöglicht. Während bei herkömmlichen Bewegungsbildsensoren es notwendig ist, einzelne Bilder zu speichern, diese in ihrer kompletten Auflösung zu subtrahieren und wiederum die Ergebnisse abzuspeichern, wird beim erfindungsgemäßen Bildsensor durch Integration über einzelne, aufeinanderfolgende Zeitspannen als Ergebnis eine Datenmenge ausgegeben, die nur der Datenmenge eines einzelnen Bildes entspricht. Es wird also vorteilhafterweise eine Datenreduzierung mindestens um den Faktor zwei vorgenommen.

Darüber hinaus kann auch eine sehr drastische Form der Datenreduzierung vorgenommen werden, indem bei einer Weiterbildung der Erfindung der A/D-Wandler als 3-Werte-A/D-Wandler mit einstellbaren Schwellwerten ausgebildet ist. Die Ausgabewertemenge kann dann auf die Elemente, d.h. die Ausgabewerte -1, 0 und +1 beschränkt werden, um anzugeben, ob ein bestimmtes Toleranzband verlassen wird und, bei Verlassen des Toleranzbandes, in welcher Richtung. Im Übrigen kann das Toleranzband auch unsymmetrisch um den Nullpunkt ausgelegt sein.

Des Weiteren kann eine präzisere Auswertung als bei einem reinen AC-gekoppelten Pixelsensor erfolgen, zumal bei dem zuletzt genannten Sensor lediglich die Änderung an sich detektiert wird. Da die Ursache für die Reflexionsänderung aber zunächst für den Sensor nicht erfassbar ist, kann über eine Filterung mit Hilfe von Schwellwerten auch bezüglich der Ursachen für die Reflexionsänderungen eine Auswahl getroffen werden, z.B. werden bloße Helligkeitsschwankungen vernachlässigt.

Um eine weitere Option einer vorteilhaften Datenreduktion bieten zu können, kann ein Schwellwertfilter (Threshold-Filter) zur Datenreduktion eingesetzt werden. Erst ab einer bestimmten Größe eines Differenzwerts wird der Differenzwert weitergegeben und als relevante Änderung identifiziert, die sodann auch als Bewegung interpretiert wird.

Grundsätzlich ist es denkbar, bei Ausführungsbeispielen der Erfindung den Schwellwertfilter zur Datenreduktion dem A/D-Wandler vorzuschalten und den ausgegebenen Differenzwert anschließend an den A/D-Wandler weiterzugeben, oder aber, den Schwellwertfilter dem A/D-Wandler nachzuschalten und das digitale Ergebnis entsprechend weiterzugeben. Um eindeutig eine Bewegung erkennen zu können, können in vorteilhafter Weise durch den Schwellwertfilter weitere systematische Fehlerquellen ausgeschlossen werden, die auch zu einer Änderung des Bildes führen.

Beispielsweise ist in der Regel damit zu rechnen, dass die Umgebungshelligkeit auch innerhalb kurzer Zeitspannen leicht variiert. Liegen die entsprechenden Zeitspannen beispielsweise im Millisekundenbereich, sind die Schwankungen zwar meist nicht groß, können aber dennoch nicht vollständig ausgeschlossen werden, etwa bei flackernden Lichtquellen in der Umgebung, bedingt durch die Netzfrequenz oder dergleichen. Auch statistische Ungenauigkeiten bei der Messung könnten gegebenenfalls ausgeglichen werden, indem der Schwellwertfilter hinsichtlich seines Schwellwertes entsprechend gesetzt wird. Besonders vorteilhaft ist es, den Schwellwert einstellbar gestalten zu können. Daneben kann auch die Datenmenge reduziert werden, sodass eine schnellere Auswertung erfolgen kann.

Bei einer vorteilhaften Weiterbildung der Erfindung kann als Bildsensor bzw. als Bewegungsbildsensor ein TOF-Entfernungssensor zur Messung der Entfernung zum Objekt verwendet werden. Besonders vorteilhaft ist an dieser Ausführungsform, dass TOF-(Time-of-flight)-Sensoren sehr vorteilhaft im Zusammenhang mit Überwachungsvorrichtungen einsetzbar sind, weil sie die Position bestimmen und liefern können, die ein detektiertes Objekt besitzt. Diese Positionsangabe kann mit herkömmlichen Änderungssensoren regelmäßig nicht festgestellt werden.

Um die Belichtung der Empfangsmatrix zu ermöglichen, kann ein öffenbarer und schließbarer Shutter vorgesehen sein, wobei bei geöffnetem Zustand des Shutters entsprechend der Pixel-Matrix belichtet werden kann. Die Belichtungszeit wiederum kann durch eine der Kontrolleinheiten kontrolliert werden. Die Verwendung eines Shutters ermöglicht es, wohldefinierte Zeitspannen für die Belichtung oder das Abschotten der Pixelmatrix vorgeben zu können. Dies ist besonders wichtig, da zwar die absoluten Grauwerte für die Auswertung im vorliegenden Fall grundsätzlich keine Rolle spielen, dennoch aber dafür gesorgt werden sollte, dass die einzelnen Sammeleinheiten eine Integration über definierte Zeiten vornehmen, damit eine Differenz ungleich Null nach Bildung des entsprechenden Differenzwertes nicht dadurch zustande kommt, dass die einzelnen Sammeleinheiten über unterschiedlich lange Zeiten jeweils integriert haben. Würden nämlich die Zeitspannen, in denen eine Belichtung stattfindet und die jeweiligen Sammeleinheiten die Grauwerte aufintegrieren, ungleichmäßig erfolgen, so würden entsprechend die jeweiligen Sammeleinheiten über unterschiedlich lange Zeiten aufintegrieren. Auch dann, wenn keinerlei Änderungen in dem aufgenommenen Bild erfolgen würden, würde sich daraus ein Differenzwert ungleich Null ergeben, ohne dass eine Bewegung stattgefunden hätte. Durch die Verwendung des Shutters kann bei dieser Ausführungsform der Erfindung ein besonders zuverlässiger Betrieb gewährleistet werden.

Erfindungsgemäß verfügt die entsprechende Kontrolleinheit über einen Timer, der die entsprechenden Zeitspannen oder Zeitintervalle genau misst, beispielsweise die Zeitspanne zum Umschalten zwischen den Sammeleinheiten bzw. Belichtungszeit der Pixelmatrix bzw. Verzögerungszeit zwischen zwei aufeinanderfolgenden geöffneten Zuständen des Shutters. Auch hierdurch wird die Zuverlässigkeit des Bildsensors in vorteilhafter Weise verbessert. Gegebenenfalls kann es notwendig sein, den Bildsensor und dessen Auswertung an spezielle Gegebenheiten anzupassen, die durch die Umgebung und die Art der zu detektierenden Bewegung bedingt sein können. Vorteilhafterweise ist der Timer bei einer Weiterbildung der Erfindung demnach einstellbar ausgebildet. Beispielsweise kann es aufgrund der Umgebungshelligkeit notwendig sein, die Gesamtzeit, über die entsprechend die Grauwerte in den Sammeleinheiten aufintegriert werden können, unterschiedlich zu gestalten. Wenn das Umgebungslicht hinsichtlich seiner Intensität zeitlich schwankt, so kann die Integrationszeit an diese zeitlichen Schwankungen in der Umgebung angepasst werden. Erfolgen die Schwankungen eher über längere Zeitspannen, so kann es sich zum Beispiel empfehlen, die Integrationszeit kürzer zu wählen, sodass das Ergebnis durch diese Schwankung kaum beeinflusst wird. Handelt es sich um höherfrequente Schwankungen, so kann auch eine wesentlich längere Integrationszeit gewählt werden, damit sich im Zeitmittel der Unterschied ausgleicht. Dementsprechend kann beispielsweise auch ein Schwellwert eingestellt werden.

Der Sensor kann, muss aber nicht notwendigerweise die Strahlungsquelle zur Aussendung von Strahlung als integralen Bestandteil aufweisen. Eine Ausführungsvariante kann entsprechend die Strahlungsquelle umfassen und so ein kompakt zusammengefasste Vorrichtung darstellen. Die von ihr ausgesandte Strahlung wird reflektiert und von der Empfangseinrichtung detektiert. Die Strahlungsquelle ist bei einer Weiterbildung der Erfindung dazu ausgebildet, von wenigstens einer der Kontrolleinheiten kontrolliert zu werden, um während wenigstens einer der beiden Beleuchtungsphasen den zu erfassenden Bereich zu beleuchten.

Insbesondere dann, wenn eine Entfernung bestimmt werden soll, ist es vorteilhaft, bei einer Ausführungsform der Erfindung eine Elektronikeinrichtung zur Erzeugung eines Modulationssignals zur Modulation der von der Strahlungsquelle ausgesandten Strahlung vorzusehen, wobei das Modulationssignal bestimmte Phaseneigenschaften aufweist. Bei Entfernungssensoren, insbesondere TOF-Sensoren, bei denen die Lichtlaufzeit bestimmt wird, ist es regelmäßig nicht möglich, eine Laufzeit des Lichtes anhand der durch die Wellenlängen gegebenen, dem Licht eigenen Frequenz zu bestimmen, da die Frequenz viel zu hoch wäre. Dem Licht kann aber ein in Bezug auf die Lichtfrequenz niederfrequentes Signal aufmoduliert werden (Modulationssignal), bei dem durch Bestimmung der Phasendifferenz die Laufzeit einfacher festgestellt werden kann. Messtechnisch ist die Erzeugung eines derartigen Modulationssignals und der Aufmodulierung des Signals auf das ausgesendete Licht somit besonders vorteilhaft.

Bei einer besonders bevorzugten Weiterbildung der Erfindung kann der Bildsensor in beiden Betriebsmodi betrieben werden, nämlich zum einen als Bewegungsbildsensor und zum anderen als TOF-Entfernungssensor. Ein derartiger Bildsensor ermöglicht also eine umfassende Überwachung und kann wesentlich mehr Informationen liefern als herkömmliche Sensoren, nämlich zum einen die Feststellung einer Bewegung und zum anderen die Messung einer Entfernung. Da eine Bewegung nicht immer mit der Änderung einer Entfernung korreliert sein muss, kann also ein derartiger Bildsensor wesentlich präziser arbeiten. Die Entfernung kann also entsprechend mit Hilfe des Modulationssignals bzw. der vom Modulationssignal dem ausgesandten Licht aufgeprägten Phaseneigenschaften bestimmt werden. Der Bewegungsbildsensor wiederum kann es ausnutzen, dass mittels der Differenzbildvorrichtung die aufintegrierten Ladungsträger voneinander subtrahiert werden, also Grauwerte miteinander verglichen werden.

Bei einer vorteilhaften Ausführungsform der Erfindung kann Infrarotlicht eingesetzt werden, welches für das menschliche Auge unsichtbar ist (Wellenlänge von IR-Licht größer als ca. 800 nm). Der Bildsensor arbeitet somit praktisch unsichtbar für eine sich in diesem Bereich befindende Person, ohne diese zu stören.

Besonders vorteilhaft arbeitet eine Ausführungsform der Erfindung, bei einer der Kontrolleinheiten bzw. die Kontrolleinheit zwischen dem Betrieb des Bildsensors im ersten oder zweiten Modus, das heißt zwischen dem Betrieb im Bewegungsbildmodus und im TOF-Sensor-Modus abwechselnd umschaltet. Denkbar ist aber auch, dass bei einer

**EP 2 978 216 B1**

Ausführungsform der Erfindung der Bildsensor umschaltbar ist und nicht automatisch wechselt zwischen den Betriebsmodi, das heißt entweder nur als Bewegungssensor oder nur als Entfernungssensor arbeitet. Auf diese Art und Weise wird eine besonders hohe Flexibilität des Bildsensors ermöglicht.

Bei einem weiteren Ausführungsbeispiel der Erfindung ist die Umschaltvorrichtung dazu ausgebildet, beim Betrieb im ersten Modus (als TOF-Entfernungssensor) schneller umzuschalten als beim Betrieb im zweiten Modus (Bewegungsbildsensor-Modus), wobei beispielsweise beim ersten Modus das Umschalten um wenigstens den Faktor eintausend schneller erfolgen kann als im zweiten Modus. Da bei der Laufzeitmessung Phasenunterschiede zwischen einem ausgesandten und einem empfangenen Signal bestimmt werden und die Korrelationssignale typischerweise um n (pi) phasenverschoben sind, kann also bei der Entfernungsmessung eine größere Genauigkeit erreicht werden, wenn diese schneller getaktet ist. Bei der Aufintegrierung und Differenzbildung von Grauwerten ist es hingegen vorteilhaft, über größere Zeitspannen zu integrieren, damit statistisch bedingte Abweichungen ausgeglichen werden können.

Dementsprechend kann also der erfindungsgemäße Bildsensor zur Bestimmung einer Bewegung eines Objektes für Überwachungsvorrichtungen eingesetzt werden, wobei sodann die Differenzbildungsvorrichtung zur Grauwertdifferenzbildung zur Unterscheidung von bewegten und statischen Objekten verwendet wird. Auf diese Weise können die bereits zuvor genannten Vorteile gemäß der Erfindung für ein derartiges Verfahren genutzt werden.

Darüber hinaus kann der erfindungsgemäße Bildsensor oder ein Ausführungsbeispiel der Erfindung in besonders vorteilhafter Weise zur Erkennung von Bewegungsunschärfe (motion blurr) bei der sensorischen Erfassung eines Objektes verwendet werden, wobei die Differenzbildungsvorrichtung zur Grauwertdifferenzbildung zur Unterscheidung von bewegten und statischen Objekten verwendet wird und wobei anhand der Grauwertdifferenzbildung auf eine Bewegungsunschärfe geschlossen wird, wenn sich innerhalb einer bestimmten Zeitspanne für eines der Demodulationspixel eine bestimmte Grauwertdifferenz ergibt. Die erwähnte, bestimmte Zeitspanne hängt insbesondere von der Geschwindigkeit der Bewegung ab. Setzt man einen erfindungsgemäßen Bildsensor oder ein Ausführungsbeispiel der Erfindung als Bewegungsbildsensor in entsprechender Weise ein, so zeigt das am Ausgang bereitgestellte Bild eines erfassten bewegten Objekts die zeitliche Ableitung der Grauwert-Änderungen. Bewegt sich also beispielsweise ein Objekt gleichförmig durch das Bild, so sind (nur) dessen Ränder bei ihrer Bewegung durch das Bild sichtbar.

Der erfindungsgemäße Bildsensor bzw. ein Ausführungsbeispiel der Erfindung ermöglicht es, festzustellen, welche Pixel innerhalb der Pixel-Matrix von der Bildunschärfe betroffen sind bzw. sein können (Motion-Blurr-Identifikation). Bei Einstellung und Anpassung der entsprechenden Zeitspanne in Bezug auf eine mögliche Geschwindigkeit eines Objektes würde sich sodann nämlich nach Bildung des Differenzwertes ein Unterschied in den Grauwerten ergeben. Auf diese Weise kann also in besonders vorteilhafter Art und Weise eine verbesserte Bildauswertung erfolgen.

Allen Ausführungsbeispielen der Erfindung ist gemeinsam, dass ein 2-Tap-Demodulationspixel sowohl für die Akquisition als auch für die Speicherung zweier zeitverzögert aufgenommener Grauwertebilder im Analogbereich verwendet werden kann. Dadurch wird ein modifizierter Betrieb des Demodulationspixels zur Verfügung gestellt. Die Sammeleinheiten des 2-Tap-Demodulationspixels werden gewissermaßen als Analogspeicher für die zeitverschobene Akquisition der Grauwertebilder eingesetzt. Dabei erfolgt kein zwischenzeitliches Auslesen der Pixelmatrix. In besonders vorteilhafter Weise können bei einer Ausführungsform der Erfindung Belichtungszeit und Verzögerungszeit, also die Zeit zwischen dem Schließen des Shutters des ersten Bildes und dem Öffnen des Shutters des zweiten Bildes einstellbar gestaltet werden. Anschließend kann ein differentielles Auslesen der Pixel einschließlich einer aktiven Hintergrundlichtunterdrückung unter Verwendung einer differenziellen Auslesekette vorgenommen werden. Eine "Messreihe", insbesondere eine Aufnahme einer Serie von Bildern, die einzeln, aber in ihrer Gesamtheit ausgewertet werden müssen, muss nicht erfolgen. Die Akquisitionssequenz umfasst dementsprechend:

1. Öffnen des Shutters.
2. Schließen des Shutters.
3. Abwarten einer vordefinierten Verzögerungszeit.
4. Erneutes öffnen und Schließen des Shutters.
5. Differenzielle Auslese einschließlich aktiver Hintergrundlichtunterdrückung.

Beim ersten Öffnen des Shutters wird dabei grundsätzlich auf einen der beiden Taps, beim nachfolgenden öffnen des Shutters auf dem anderen Tap integriert.

Zur Datenreduktion kann der Schwellwert verändert werden, beispielsweise kann eine Wandlung mit 12 Bit erfolgen. Durch das Setzen des Schwellwertes kann eingestellt werden, wann kleinere Änderungen des Bildes noch als vernachlässigbar erkannt werden.

Optional kann auch ein gesondertes Bit vorgesehen sein, welches angibt, ob der Schwellwertbereich nach oben oder nach unten hin verlassen wurde (Vorzeichenbit). Zudem können Positionsbit vorgesehen sein, welche die Position des entsprechenden Bits innerhalb der Matrix kennzeichnen.

Bei Nutzung des Schwellwertes (Threshold) kann optional der Differenzgrauwert mit voller Auflösung ausgegeben werden, desgleichen die Pixel-Position. Pixel, die nicht aus dem Toleranzband fallen, das heißt, deren Abweichung bzw. Differenzbetrag kleiner als der Threshold ist, werden nicht ausgegeben, was den Vorteil einer Datenreduktion mit sich bringt. Eine Kompression kann erreicht werden durch Verwendung von Floating-Point-Notationen für die Differenzgrauwertangabe.

Gegebenenfalls kann der LED-Treiberausgang verwendet werden, um Differenzbilder in schwach ausgeleuchteten Szenen aufzunehmen. Es ist möglich, die LED-Pulse mit einer Bildaufnahme (Blitz-Funktion) zu synchronisieren (LED: englische Abkürzung für Leuchtdiode).

Des Weiteren ist bei den Ausführungsbeispielen der Erfindung ermöglicht, dass zwischen der Aufnahme von Grauwerten und der Entfernungsmessung (insbesondere auch 3D-TOF-Entfernungsmessung) in Echtzeit umgeschaltet werden, sodass die beiden Verfahren einander ergänzend eingesetzt werden können.

Ausführungsbeispiele

Ausführungsbeispiele der Erfindung sind in den Zeichnungen dargestellt und werden nachfolgend unter Angabe weiterer Einzelheiten und Vorteile näher erläutert.

Figur 1        den TOF Entfernungssensor mit Objekt,

Figur 2        die Empfangseinrichtung mit Korrelationseinrichtung und Teilen der Differenzbildungseinrichtung,

Figur 3        ein Ablaufdiagramm des Verfahrens zum Betrieb eines TOF Entfernungssensors,

Figur 4        die Intensitätsverläufe der ausgesandten und empfangenen Strahlung,

Figur 5        die Signalverläufe der Korrelationssignale,

Figur 6        die Werteverläufe der linken Seite des Empfangssensors während einer ersten beispielhaften Messphase,

Figur 7        die Werteverläufe der rechten Seite des Empfangssensors während einer ersten beispielhaften Messphase,

Figur 8        den Ladungsdifferenzverlauf der ersten Messphase,

Figur 9        den normierten Ladungsdifferenzverlauf der ersten Messphase,

Figur 10       die Werteverläufe der linken Seite des Empfangssensors während einer zweiten beispielhaften Messphase,

Figur 11       die Werteverläufe der linken Seite des Empfangssensors während einer zweiten beispielhaften Messphase,

Figur 12       den Ladungsdifferenzverlauf der zweiten Messphase,

Figur 13       den normierten Ladungsdifferenzverlauf der zweiten Messphase,

Figur 14       den Verlauf der summierten Normierungsfunktion,

Figur 15       die linearen Funktionen der Berechnungseinrichtung,

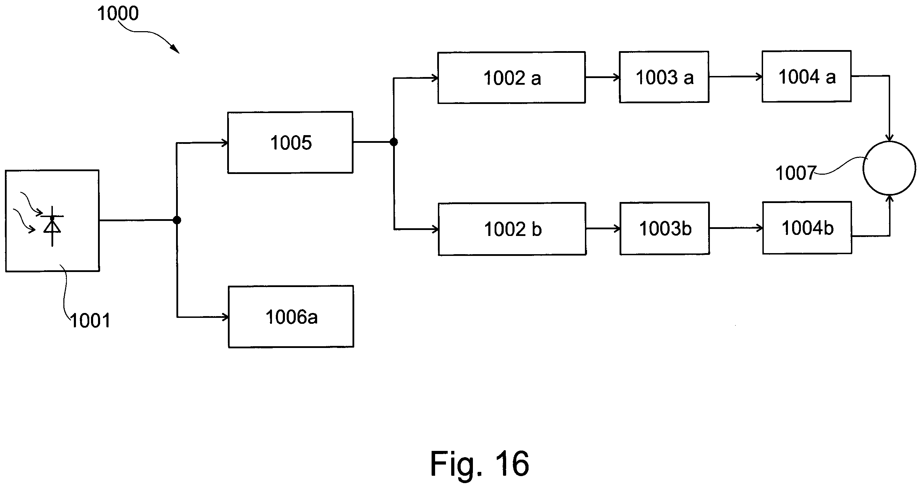

Figur 16       ein Blockdiagramm der Funktionsablaufs eines 3D-TOF-Pixels,

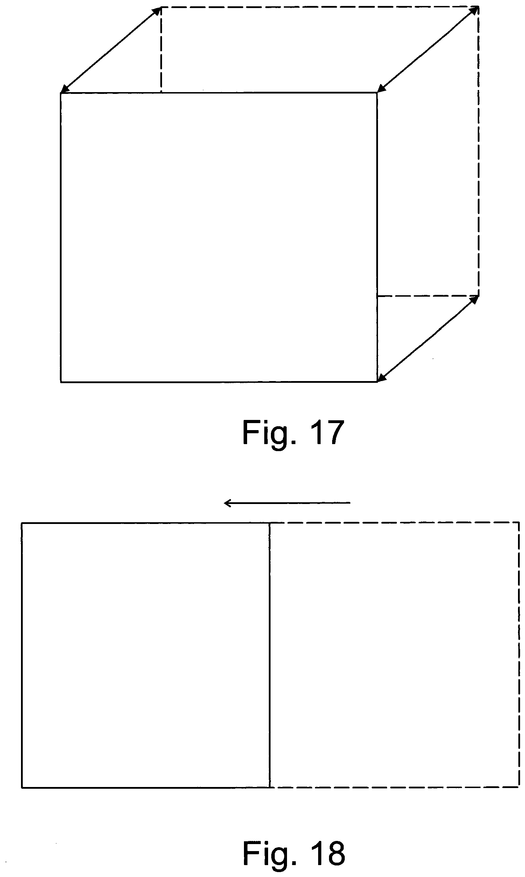

Figur 17       eine Bewegung eines Objekts nach hinten,

Figur 18       eine seitliche Bewegung eines Objekts,

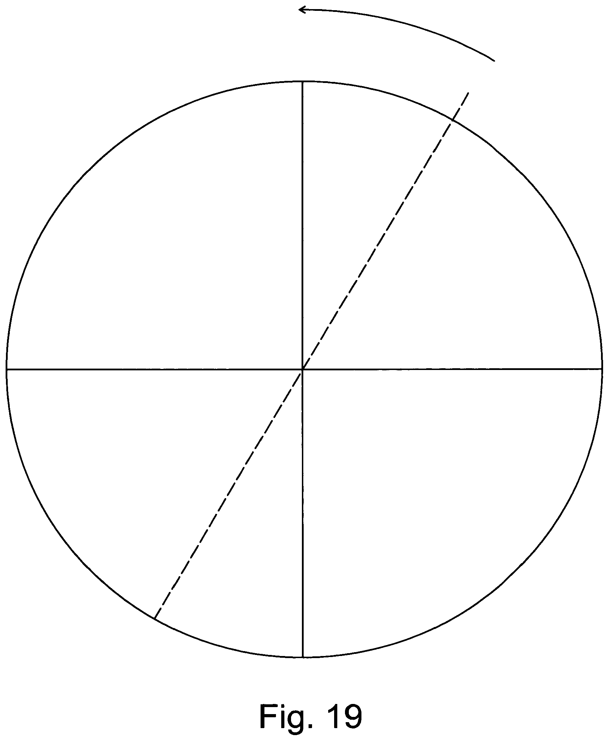

Figur 19       eine Drehung eines Objekts, sowie

Figur 20       eine seitliche Bewegung eines Objekts im erfassten Bildbereich.

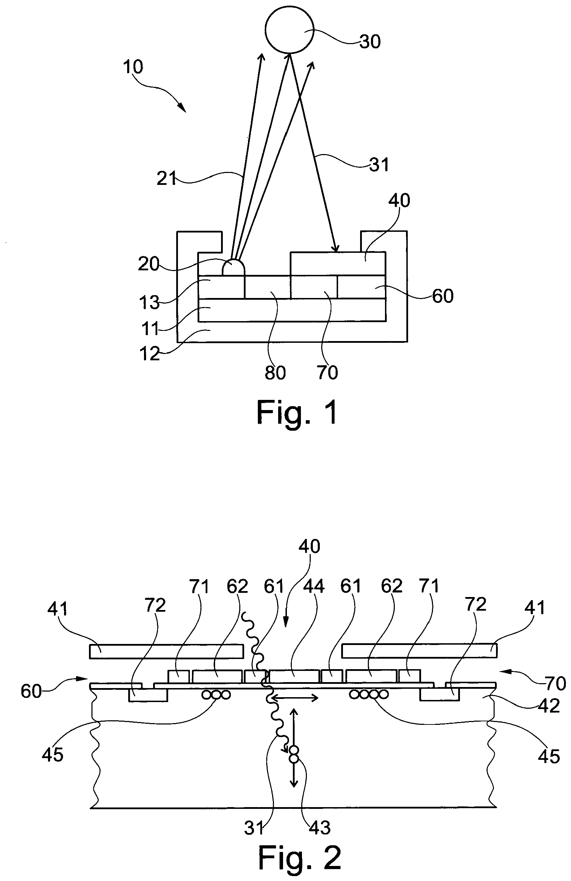

Figur 1 zeigt den TOF Entfernungssensor 10 mit Objekt 30. Das Objekt ist vom TOF Entfernungssensor beabstandet. Die Strahlungsquelle 20 ist beispielsweise eine LED oder eine Anordnung von mehreren LEDs. Die Strahlungsquelle wird von der Elektronikeinrichtung 13 angesteuert, welche die Strahlungsquelle mit einem Rechtecksignal als Modulationssignal moduliert betreibt. Daneben ist aber auch im Übrigen eine Modulation/Demodulation mit z.B. einem Sinussignal denkbar. Die Strahlungsquelle sendet beispielsweise monochromatisches IR Licht 21 aus, welches am Objekt 30 diffus reflektiert wird und als reflektierte Strahlung 31 auf die Empfangseinrichtung 40 trifft. Die empfangene Strahlung erzeugt in der Empfangseinrichtung einen Werteverlauf der induzierten Photoelektronen und damit einen Signalverlauf für die empfangene Strahlung. Die Korrelationseinrichtung 60 ist mit der Empfangseinrichtung 40 verbunden und übernimmt den zeitlichen Werteverlauf der empfangenen Strahlungsintensität. Die Elektronikeinrichtung bildet für 2 Messphasen jeweils 2 Korrelationssignale, welche jeweils von der Korrelationseinrichtung übernommen werden. Die Korrelationseinrichtung korreliert jeweils die Korrelationssignale mit dem Signalverlauf der Empfangseinrichtung und erzeugt jeweils 2 Korrelationswerte. Die Differenzbildungseinrichtung 70 ist mit der Korrelationseinrichtung verbunden und übernimmt die jeweils 2 Korrelationswerte und bildet jeweils 2 Differenzkorrelationswerte jeweils aus der Differenz der 2 Korrelationswerte. Die Berechnungseinrichtung 80 ist mit der Korrelationseinrichtung verbunden und übernimmt die beiden Differenzkorrelationswerte aus den beiden Messphasen und berechnet die Entfernung des Objekts vom TOF Entfernungssensor. Die Elektronikeinrichtung 13, die Empfangseinrichtung 40, die Korrelationseinrichtung 60, die Differenzbildungseinrichtung 70 und die Berechnungseinrichtung 80 sind auf einem Chip integriert und in einem kombinierten CMOS/CCD Verfahren ausgeführt. Der Chip und die Strahlungsquelle 20 sind an einem Träger 11 angeordnet und von einem Gehäuse 12 umgeben. Die Strahlungsquelle und die Empfangseinrichtung weisen jeweils eine in der Figur nicht dargestellte Optikeinrichtung auf, die in Richtung des Raumes fokussiert, in dem die Entfernung von Objekten bestimmt werden soll.

Die ausgesandte Strahlung 21 weist eine Wellenlänge von 860 nm auf und ist mit einem Rechtecksignal von 20 MHz gepulst. Die von der Empfangseinrichtung 40 empfangene reflektierte Strahlung bleibt mit einem Rechtecksignal von 20 MHz gepulst und ist gegenüber dem Modulationssignal der von der Strahlungsquelle 20 ausgesendeten Strahlung um die Zeit des Lichtweges phasenverschoben. Die Phasenverschiebung zwischen ausgesendetem und empfangenem Rechtecksignal entspricht der doppelten Entfernung zwischen TOF Entfernungssensor und Objekt.

Figur 2 zeigt die Empfangseinrichtung 40 mit Korrelationseinrichtung 60 und Teilen der Differenzbildungseinrichtung 70 in einem Halbleiterchip integriert. Die Empfangseinrichtung 40 weist ein niedrig n-dotiertes Float Zone Silizium Halbleitersubstrat 42 auf mit einem spezifischen elektrischen Flächenwiderstand von größer oder gleich 2000 Ohm/cm. An der Oberfläche des Halbleitersubstrats ist ein Driftgate 44 und beidseitig in symmetrischer Anordnung und jeweils voneinander mit Abstand jeweils ein Modulationsgate 61, ein Storagegate 62, ein Transfergate 71 und eine Floating Diffusion 72 angeordnet. Die dazu sinnvollen Layer und Kontakte sind nicht dargestellt. Eine Blende 41 ist über den Gates angeordnet, wobei die Blende eine Blendenöffnung im Bereich des Driftgates aufweist und die Storagegates, Transfergates und die Floating Diffusion samt dem unter den jeweiligen Gates liegenden Halbleitersubstrat gegenüber der einfallenden reflektierten Strahlung 23 abschattet. Das Halbleitersubstrat ist mindestens unter dem Driftgate verarmt. Das Driftgate 44 ist mit positivem Potential beaufschlagt und bildet im Halbleitersubstrat eine Raumladungszone aus.

Die über die Blendenöffnung in das Halbleitersubstrat unter dem Driftgate eindringende reflektierte IR Strahlung 31 induziert im Halbleitersubstrat 42 Elektronen-Lochpaare 43.

Die Photoelektronen werden durch die vom Driftgate 44 ausgebildete Raumladungszone zum Driftgate hin angezogen. Das Driftgate weist ein Potential von etwa 4 V auf. Die Anzahl der angezogenen Photoelektronen ist proportional der empfangenen Strahlungsintensität.

Die Modulationsgates 61 können mit einem modulierten Potential beaufschlagt sein dessen Maximum zwischen den Potentialen des Driftgates und des Storagegate und dessen Minimum unter dem des Driftgates liegt. Das Potential des Modulationsgates moduliert etwa zwischen den Werten 0 V und 5 V. Die beiden Modulationsgates sind zueinander mit inversen Potentialen betrieben. Das heißt, dass das Potential des einen Modulationsgates 0 V ist, wenn das des anderen positiv ist und umgekehrt. Dann ist stets das eine Modulationsgate mit 0 V und das andere Modulationsgate mit 5 V Potential versehen. Ein Potentialminimum, hier also 0 V, führt zu einer Potentialbarriere für die Photoelektronen unter dem Driftgate, sodass keine Photoelektronen zum Modulationsgate zugeordneten Storagegate gelangen können. Ein Potentialmaximum, hier also 5 V, führt zu einem Abfluss der Photoelektronen unter dem Driftgate am Modulationsgate vorbei in das zugeordnete Storagegate.

Durch die Beaufschlagung der beiden Modulationsgates mit jeweils einem Potential das jeweils zueinander inversen Rechtecksignalen entspricht, wird der Fluss der durch die empfangene Strahlungsintensität erzeugten Photoelektronen entsprechend einer Weiche gelenkt. Der so entstehende Fluss dieser Photoelektronen unter den Modulationsgates entspricht einer Multiplikation, das heißt einer Korrelation der entsprechenden Rechtecksignale mit dem empfangenen Strahlungssignal. Die Rechtecksignale haben hier die Eigenschaft eines korrelierenden Signals und sind hier als Korrelationssignal bezeichnet.

Die Storagegates 62 sind mit einem höheren Potential als das Driftgate 44 beaufschlagt und sammeln die Photoelektronen 43, 45 entsprechend dem Status der Modulationsgates wechselseitig unter sich. Die Storagegates haben etwa das Potential 10 V. Die unter den Storagegates 62 durch die Photoelektronen 45 angesammelten Ladungen entsprechen den Korrelationswerten. Die Korrelationswerte liegen somit in der Ladungsdomäne vor. Die Ansammlung der Photoelektronen unter den entsprechenden Storagegates entspricht einer zeitlichen Integration der oben erwähnten Korrelation von Rechtecksignal und empfangenen Strahlungssignal.

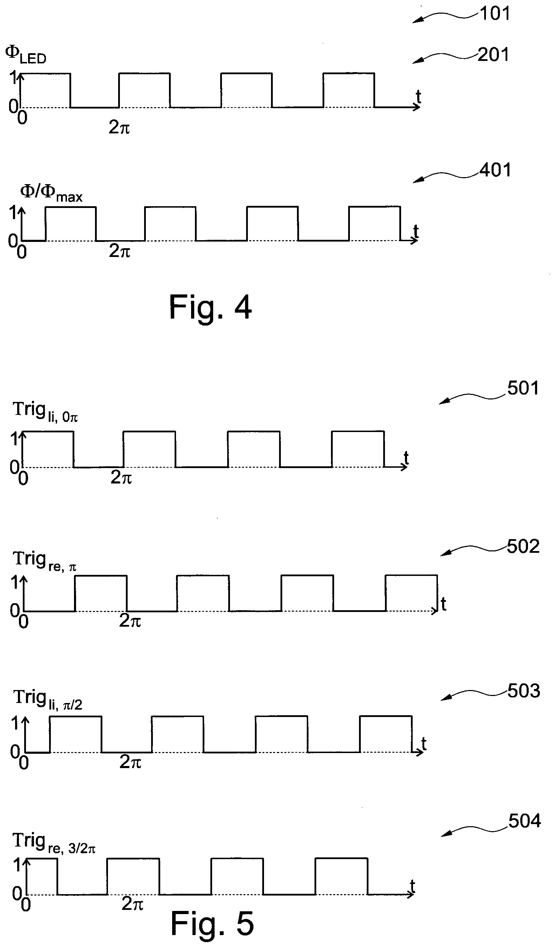

Die so messbar vorliegenden Korrelationswerte werden für die spätere Besprechung anhand bestimmter Korrelationssignale entsprechend Fig. 5 wie folgt definiert:

A0: aus gegenüber Modulationssignal nicht versetztem Korrelationssignals 501
A1: aus um 1/4 Periode gegenüber Modulationssignal versetztem Korrelationssignal 502
A2: aus um 1/2 Periode gegenüber Modulationssignal versetztem Korrelationssignal 503
A3: aus um 3/4 Periode gegenüber Modulationssignal versetztem Korrelationssignal 504

Zur Detektion der unter den Storagegates angesammelten Photoelektronen wird zum einen das Potential der Modulationsgates auf 0 V gelegt, um eine Potentialbarriere für die Photoelektronen in Richtung Driftgate zu bilden. Zum anderen wird das Potential der Transfergates auf einen mittleren Wert angehoben, beispielsweise 6 V, um einen bedingten Abfluss der Photoelektronen in Richtung Floating Diffusions zu ermöglichen.

Nun wird das positive Potential beider Storagegates von etwa 10 V mittels einer Zeitrampe parallel abgesenkt. Das sich dabei verändernde addierte Potential aus dem sinkenden an die Storagegates angelegten positiven Potential und dem negativen Potential der darunter befindlichen Ladung bestimmt, ob Ladung über die Transfergates abfließen kann. Der Absenkprozess teilt sich dabei in drei Phasen ein. In einer ersten Phase der Zeitrampe ist das genannte addierte Potential noch für beide Storagegates positiver als das konstant und gleich positive Potential der Transfergates und es fließt keine Ladung ab. In einer anschließenden zweiten Phase der Zeitrampe ist das genannte addierte Potential für ein Storagegate positiver und für das andere Storagegate negativer als das konstant und gleich positive Potential der Transfergates. Dadurch fließt Ladung unter dem Storagegate mit dem positiveren addierten Potential über das zugeordnete Transfergate in die zugeordnete Floating Diffusion ab, sodass das addierte Potential wieder gleich dem Potential des entsprechenden Transfergates ist. In einer abschließenden dritten Phase der Zeitrampe sind die genannten addierten Potentiale beider Storagegates höher als die konstant gleichen Potentiale. Dadurch fließen unter beiden Storagegates Ladungen über das jeweils zugeordnete Transfergate in die jeweils zugeordnete Floating Diffusion ab. Unmittelbar mit Beginn der dritten Phase wird die Zeitrampe gestoppt, d.h. das Potential der Storagegates wird nicht weiter abgesenkt, sodass im Wesentlichen nur der Ladungsabfluss aus der zweiten Phase relevant ist. Die nun im einen geladenen Floating Diffusion vorliegende Ladungsmenge entspricht somit der Differenz der Ladungsmenge aus den beiden Storagegates. Die Zeitrampe führt also eine Subtraktion der Ladungsmengen unter den beiden Storagegates durch. Die vor der Ausführung der Zeitrampe unter den beiden Storagegates angesammelte Ladungsmenge entspricht, wie oben ausgeführt, den entsprechenden Korrelationswerten. Somit entspricht nach Durchführung der oben beschriebenen Zeitrampe die Ladungsmenge der einen geladenen Floating Diffusion dem entsprechenden Differenzkorrelationswert.

Die Ladungsmenge der einen geladenen Floating Diffusion wird nun mittels Source Follower in eine entsprechende Spannung gewandelt und anschließend mittels A/D-Wandler (Analog-Digital-Wandler) in einen entsprechenden digitalen Wert gewandelt. Dieser digitale Differenzkorrelationswert wird der Berechnungseinrichtung zur weiteren Berechnung übergeben.

Die Differenzkorrelationswerte werden für die folgenden Ausführungen anhand der sie bildenden Korrelationswerte wie folgt definiert:

$$C0 := A0 - A2$$

$$C1 := A1 - A3$$

Die Berechnungseinrichtung ist eine digitale Schaltung, die auf dem gleichen Halbleiterchip implementiert ist wie die Empfangseinrichtung, die Korrelationseinrichtung und die Differenzbildungseinrichtung. Insbesondere sind die Empfangseinrichtung, die Elektronikeinrichtung, die Korrelationseinrichtung, die Differenzbildungseinrichtung und die Berechnungseinrichtung in CMOS/CCD Technologie auf einem einzigen Halbleiterchip insbesondere als System on Chip angeordnet.

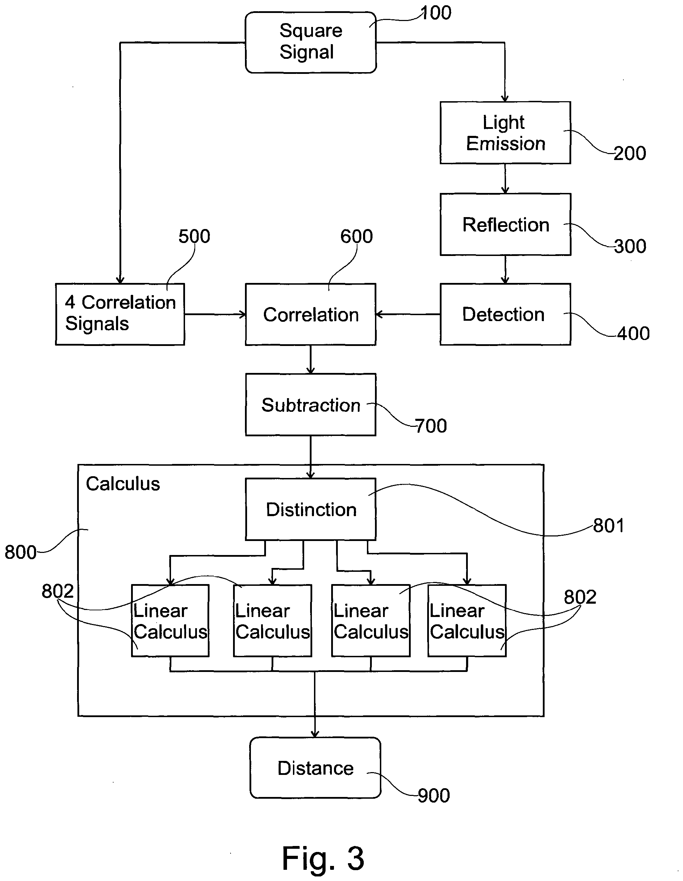

Figur 3 zeigt ein Ablaufdiagramm des erfinderischen Verfahrens zum Betrieb des TOF Entfernungssensors nach Figur 1 und 2.

Die Elektronikeinrichtung 13 erzeugt ein Rechtecksignal als Modulationssignal 100. Das Modulationssignal könnte dem TOF-Entfernungssensor auch extern zugeführt werden. Das Modulationssignal wird synchron sowohl an die Strahlungsquelle 20 zum Modulieren der Lichtemission 200 als auch an die Korrelationseinrichtung 60 zur Bildung 500 von 4 Korrelationssignalen übergeben. Das modulierte Licht erfährt am Objekt 30 eine Reflektion 300 in Richtung der Empfangseinrichtung von der das reflektierte Licht empfangen 400 wird. Sowohl die Signalinformation des empfangenen Lichtes als auch die 4 Korrelationssignale werden der Korrelationseinrichtung 60 zur Korrelation 600 übergeben. Die Korrelationseinrichtung 60 korreliert die Signalinformation des empfangenen Lichts mit den Korrelationssignalen und erzeugt daraus 4 Korrelationswerte. Die 4 Korrelationswerte werden von der Korrelationseinrichtung 60 an die Differenzbildungseinrichtung 70 zur Differenzbildung 700 übergeben. Die Differenzbildungseinrichtung bildet die Differenz aus jeweils 2 Korrelationswerten zu 2 Differenzkorrelationswerten und übergibt diese 2 Differenzkorrelationswerte an die Berechnungseinrichtung 80 zur Berechnung 800. Zur Berechnung 800 bildet Berechnungseinrichtung 80 zunächst eine Fallunterscheidung 801 aufgrund der 2 Differenzkorrelationswerte und weist die 2 Differenzkorrelationswerte entsprechend einer von 4 linearen Funktionen zur Berechnung mit einer konstanten linearen Funktion 802 zu. Die Berechnung 802 aus den 2 Differenzkorrelationswerten mit der zugeordneten konstanten linearen Funktion ergibt im Ergebnis einen Wert für die Distanz 900 der vom Verfahren ausgegeben wird.

Figur 4 bis Figur 15 zeigen im Folgenden das Verfahren anhand von Werteverläufen im Detail.

Die Elektronikeinrichtung 13 bildet ein Rechtecksignal 100 als Modulationssignal 101 mit den Werten 0 und 1, mit einer Frequenz von 20 MHz und mit Duty Cycle 50 % (Figur 4).

Das Modulationssignal 101 moduliert das durch die Strahlungsquelle 20 ausgesendete Licht 201 pulsartig in gleicher Phase wie das Modulationssignal 101. Die ausgesendete Strahlung 21 erfährt am Objekt 30 eine Reflexion 300 in Richtung der Empfangseinrichtung 40 welche zum Lichtempfang 400 des reflektierten Lichtes ausgebildet ist.

Das empfangene Licht weist entsprechend der zurückgelegten Entfernung eine Phasenverschiebung zum ausgesendeten Licht aus. Im Folgenden wird als Beispiel für das empfangene Licht 401 eine Phasenverschiebung von 1/2 Pi angenommen (Fig. 4).

Die Verfahrensschritte 200 bis 700, also die Verfahrensschritte nach der Erzeugung des Rechtecksignals 100 bzw. des Modulationssignals 101 bis vor der Berechnung 800, werden in zwei getrennten Messphasen durchgeführt, die jeweils eine der beiden Differenzkorrelationswerte ergeben.

In der ersten Messphase erzeugt die Elektronikeinrichtung 13 als Teil der Korrelationseinrichtung 60 die beiden Korrelationssignale 501 und 502 aus dem Modulationssignal 101. Das erste Korrelationssignal 501 ist phasengleich zum Modulationssignal 101 während das zweite Korrelationssignal 502 zum Modulationssignal um Pi phasenverschoben ist (Figur 5). Die beiden Korrelationssignale sind somit zueinander invers.

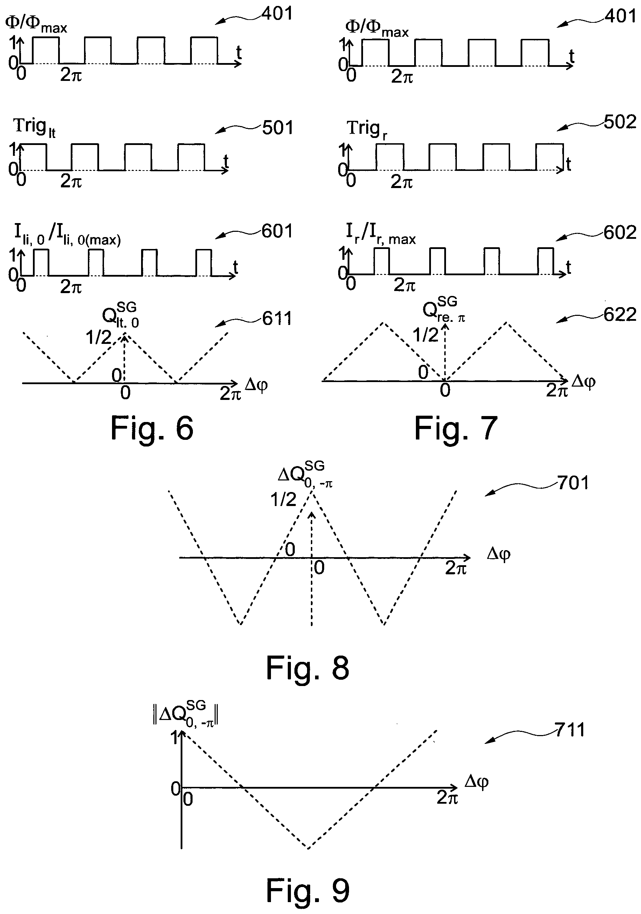

Das linke und das rechte Modulationsgate als weitere Teile der Korrelationseinrichtung werden nun entsprechend dem ersten und dem zweiten Korrelationssignal eine bestimmte Messzeit lang moduliert. Figur 6 zeigt den Phasenverlauf 501 des Potentials des linken Modulationsgates und den Phasenverlauf 601 der vom linken Modulationsgate an das zugeordnete Storagegate übergebenen Ladung. Figur 7 zeigt den Phasenverlauf 501 des Potentials des rechten Modulationsgates und den Phasenverlauf 602 der vom rechten Modulationsgate an das zugeordnete Storagegate übergebenen Ladung. Entsprechend den Ausführungen zu Figur 2 haufen sich Ladungen unter den zugeordneten Storagegates an.

Die Ladungsmengen unter den Storagegates werden nach Ablauf der Messzeit mittels der Zeitrampe subtrahiert und ergeben entsprechend den Ausführungen zu Fig. 2 den ersten Differenzkorrelationskoeffizient welcher der Berechnungseinrichtung 80 zur Berechnung 800 zugeführt wird. Die Berechnungseinrichtung speichert den ersten Differenzkorrelationskoeffizienten in einem Zwischenspeicher.

In der zweiten Messphase erzeugt die Elektronikeinrichtung als Teil der Korrelationseinrichtung 60 die beiden anderen Korrelationssignale 503 und 504 aus dem Modulationssignal 101.

Das dritte Korrelationssignal 503 ist zum Modulationssignal 101 um Pi/2 phasenverschoben während das vierte Korrelationssignal 504 zum Modulationssignal 101 um 3/2 Pi phasenverschoben ist. Die beiden Korrelationssignale sind also zueinander invers. Der weitere Ablauf der zweiten Messphase entspricht dem der ersten Messphase.

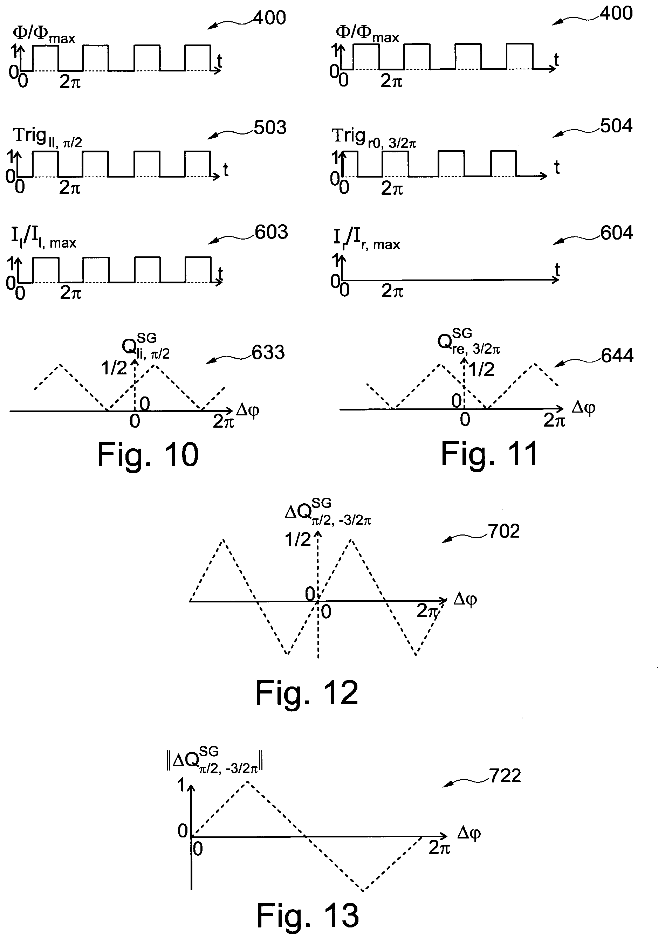

Figur 10 zeigt den Phasenverlauf 503 des Potentials des linken Modulationsgates und den Phasenverlauf 603 der vom linken Modulationsgate an das zugeordnete Storagegate übergebenen Ladung. Figur 11 zeigt den Phasenverlauf 504 des Potentials des rechten Modulationsgates und den Phasenverlauf 604 der vom rechten Modulationsgate an das zugeordnete Storagegate übergebenen Ladung.

Somit ergibt sich der zweite Differenzkorrelationswert analog welcher ebenfalls der Berechnungseinrichtung 80 zur Berechnung zugeführt wird. Die Berechnungseinrichtung verfügt nach der zweiten Messphase somit über den ersten und den zweiten Differenzkorrelationswert.

Damit sind die beiden Messphasen abgeschlossen und die Berechnung 800 kann erfolgen.

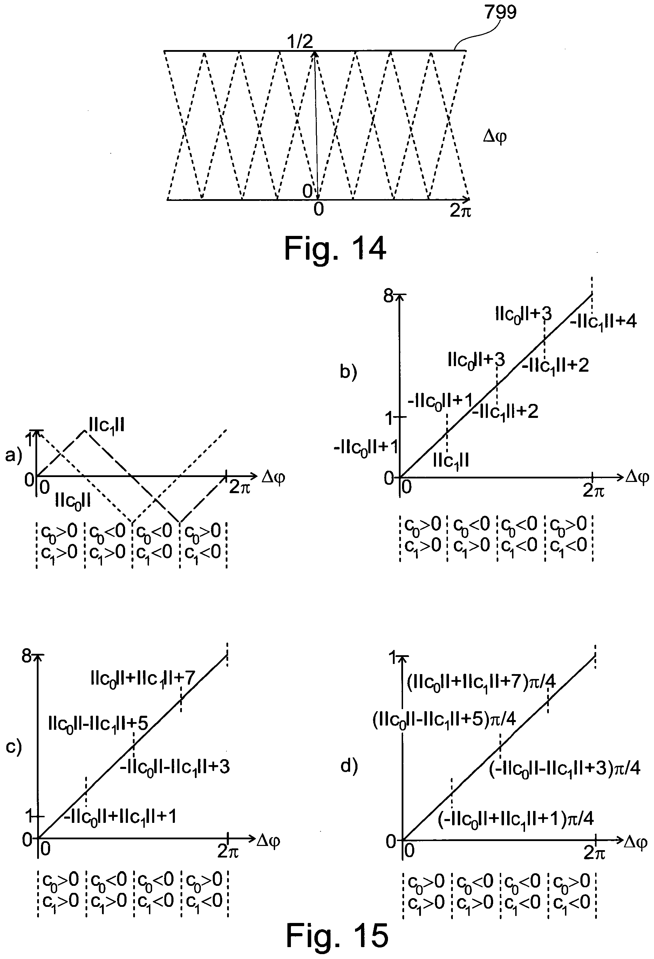

Im Folgenden soll zunächst der allgemeine Zusammenhang der Messungen erläutert werden bevor auf die Herleitung der linearen Funktion in Fig. 15 eingegangen wird.

Die gezeigten Phasenverläufe für die vom jeweiligen Modulationsgate 601, 602, 603, 604 an das jeweilige Storagegate übergebene Ladung entsprechen wegen der gleichen Summationszeit im Zeitverlauf der Ladung der Storagegates vor deren Vergleich und Subtraktion über die Zeitrampe und sind hier entsprechend Figur 4 beispielhaft für eine Phasendifferenz von Pi/2 zwischen ausgesandter und empfangener Strahlung dargestellt.

Figuren 6, 7, 10 und 11 zeigen nun den Verlauf der Menge der angehäuften Ladung unter den Storagegates, d.h. den Verlauf der Korrelationswerte 611, 622, 633, 644 in Abhängigkeit der Verzögerung, d.h. der Phasenverschiebung, d.h. der Phasendifferenz zwischen ausgesandter und empfangener Strahlung (vergleiche 201 und 401 in Fig. 4 als Beispiel), d.h. in Abhängigkeit von der Entfernung zum Objekt.

Figur 8 und Figur 12 zeigt nun den durch Differenzbildung aus den Korrelationswerten derselben Messphase entstehenden Verlauf des aus der jeweiligen Messphase resultierenden Differenzkorrelationswertes 701 und 702 in Abhängigkeit von der Phasendifferenz zwischen ausgesandter und empfangener Strahlung. Der Verlauf des Differenzkorrelationswerts 701 (Fig. 8) geht dabei aus der Differenz der Verläufe der Korrelationswerte 611 und 622 (Fig. 6 und Fig. 7) hervor. Der Verlauf des Differenzkorrelationswerts 702 (Fig. 12) geht dabei aus der Differenz der Verläufe der Korrelationswerte 633 und 644 (Fig. 10 und Fig. 11) hervor.

Fig. 14 zeigt die Addition der Absolutbeträge der Verläufe der beiden Differenzkorrelationswerte 701 und 702 in Abhängigkeit von der Phasendifferenz zwischen ausgesandter und empfangener Strahlung. Es ergibt sich ein konstanter Phasenverlauf 799 mit dem Wert 1/2. Somit ergibt die Summe der Absolutbeträge der Phasenverläufe der beiden Differenzkorrelationswerte eine geeignete Normierungsfunktion für die Differenzkorrelationswerte.

Die beiden normierten Differenzkorrelationswerte $\|C0\|$ und $\|C1\|$ ergeben sich aus den beiden Differenzkorrelationswerte C0 und C1 und der Normierungsfunktion ( |C0| + |C1| ) wie folgt, wobei "|... |" die Absolutwertfunktion bezeichnet:

$$\|C0\| := C0 \: / \: ( \: |C0| \: + \: |C1| \: )$$

$$\|C1\| := C1 \: / \: ( \: |C0| \: + \: |C1| \: )$$

Durch diese Normierung ergibt sich der in Figur 9 gezeigte Verlauf des normierten ersten Differenzkorrelationskoeffizienten 711 und der in Figur 13 gezeigte Verlauf des normierten zweiten Differenzkorrelationswerts 722 jeweils in Abhängigkeit von der Phasendifferenz zwischen ausgesandter und empfangener Strahlung.

Die Normierung kann den Vorteil haben, dass systematisch bedingte Abweichungen der gemessenen Größen nicht die errechnete Größe verändern. Eine systematische Abweichungen kann etwa in der Veränderung der empfangenen Strahlungsintensität in Abhängigkeit von der Entfernung gegeben sein.

Figur 15 zeigt die plausible Herleitung der linearen Funktionen.

Figur 15a zeigt die beiden Verläufe der beiden normierten Differenzkorrelationswerte aus Fig. 9 und Fig. 13 in einer gemeinsamen Darstellung in Abhängigkeit von der Phasendifferenz zwischen ausgesandter und empfangener Strahlung.

Der Wertebereich der Phasendifferenz ist 4 Bereiche unterteilt, die jeweils unterschiedlichen Kombinationen der Vorzeichen der Differenzkorrelationswerte im Wertebereich der Phasendifferenz entsprechen.

Diese unterschiedlichen Kombinationen der Vorzeichen der Differenzkorrelationswerte bildet die Grundlage der Fallunterscheidung 801. Es ist besonders vorteilhaft, dass die jeweiligen Voreichen als Vorzeichen der gemessenen Spannung vorliegen oder als Angabe vorliegen ob das rechte oder das linke Storagegate mehr Ladung enthielt.

Figur 15b zeigt, wie nun die Teilbereiche des Verlaufs der beiden Differenzkorrelationswerte so neu zusammengesetzt sind, dass eine monoton lineare Funktion entsteht. Die beiden Differenzkorrelationswerte werden mit C0 und C1 bezeichnet. Die beiden normierten Differenzkorrelationswerte werden mit $\|C0\|$ und $\|C1\|$ bezeichnet. Für die 4 Bereiche ergeben sich die Summen dPhi zu:

$$C0 > 0 \text{ und } C1 > 0 \quad => \quad dPhi = - \|C0\| + 1 + \|C1\|$$

$$C0 < 0 \text{ und } C1 > 0 \quad => \quad dPhi = - \|C0\| + 1 - \|C1\| + 2$$

$$C0 < 0 \text{ und } C1 < 0 \quad => \quad dPhi = + \|C0\| + 3 - \|C1\| + 2$$

$$C0 > 0 \text{ und } C1 < 0 \quad => \quad dPhi = + \|C0\| + 3 + \|C1\| + 4$$

Die vier Bereiche erstrecken sich insgesamt über den Phasenbereich von 0 bis Pi und die Summen von 0 bis 8 in insgesamt konstant linearer Weise.

Figur 15c zeigt den gleichen Phasenverlauf wie Fig. 15b.

Figur 15c zeigt den Phasenverlauf wie Fig. 15b wobei der Phasenbereich und der Wertebereich jeweils auf 1 normiert sind. Für die 4 Bereiche ergeben sich nun die Summen zu:

$$CO > 0 \text{ und } C1 > 0 \quad => \quad dPhi = (-\|CO\| + \|C1\| + 1) * (Pi / 4)$$

$$CO < 0 \text{ und } C1 > 0 \quad => \quad dPhi = (-\|CO\| - \|C1\| + 3) * (Pi / 4)$$

$$CO < 0 \text{ und } C1 < 0 \quad => \quad dPhi = (+\|CO\| - \|C1\| + 5) * (Pi / 4)$$

$$CO > 0 \text{ und } C1 < 0 \quad => \quad dPhi = (+\|CO\| + \|C1\| + 7) * (Pi / 4)$$

Damit ergeben sich die Summen nach Bereinigung der Voreichen zu:

$$CO > 0 \text{ und } C1 > 0 \quad => \quad dPhi = ( ( (C1-CO) / (CO+C1) ) + 1 ) * ( Pi / 4 )$$

$$CO < 0 \text{ und } C1 > 0 \quad => \quad dPhi = ( ( (C1+CO) / (CO-C1) ) + 3 ) * ( Pi / 4 )$$

$$CO < 0 \text{ und } C1 < 0 \quad => \quad dPhi = ( ( (C1+CO) / (C1-CO) ) + 5 ) * ( Pi / 4 )$$

$$CO > 0 \text{ und } C1 < 0 \quad => \quad dPhi = ( ( (C1-CO) / (CO+C1) ) + 7 ) * ( Pi / 4 )$$

Dies sind die linearen Funktionen, um einen Distanzwert aus beliebigen Differenzkorrelationswerten aus der oben bereits angegebenen Formel

$$D = ( c / ( 4 * Pi * f ) ) * dPhi$$

zu bestimmen.

Das 3D-TOF-Pixel 1000 kann in vier Teile unterteilt werden: Die Photodiode 1001, die Storagegates 1002a und 1002b, die Output Diffusion Nodes 1003a und 1003b und den Source Follower 1004a und 1004b. Die Photodiode 1001 dient der Erzeugung von Elektronenlochpaaren durch das einfallende, detektierte Licht (Photonen). Elektronen werden dann zu den so genannten Driftgates beschleunigt und erreichen schließlich die Tapgates, wo das modulierte Licht demoduliert wird. Es ist besonders wichtig, dass die Elektronenlochpaare schnell genug getrennt werden können, das heißt, dass die Elektronen ausreichend schnell abgezogen werden. Andere wichtige Parameter sind eine gute Quantenausbeute sowie die Unterdrückung des Dunkelstroms, welcher dennoch auftreten kann, wenn keine Photonen einfallen. Dieses Abführen der Ladungsträger zu den Tapgates ist in der Zeichnung schematisch durch den Demodulator 1005 angedeutet.

Zudem kann ein so genanntes Anti-Blooming-Gate 1006 vorgesehen sein, welches vorteilhafterweise den so genannten Blooming-Effekt verhindert, der bei CCD-Kameras auftreten kann: Die Pixel eines CCD-Sensors können nur eine bestimmte Ladungsmenge aufnehmen. Wird diese jedoch bei der Aufnahme eines Bildes überschritten, können die überschüssigen Ladungsträger auf benachbarte Pixel überwandern, sodass ein bestimmter, verzerrter Bereich im Bild überbelichtet wird.

Die Elektronen des demodulierten Signals werden dann in zwei Sammeleinheiten 1002a und 1002b, den so genannten Storagegates, aufintegriert. Die Anzahl der in den Storagegates 1002a und 1002b gesammelten Ladungsträger hängt von der Phase bzw. den Phaseneigenschaften des empfangenen optischen Signals ab. Ist die vorgegebene Integrationszeit abgelaufen, werden die Ladungen weiter zum so genannten Floating Diffusion Node 1003a, 1003b weiter geleitet, dem sich ein Source Follower 1004a, 1004b anschließt. Dementsprechend erfolgt also ein getrenntes Auslesen und Umwandeln der unter den Storagegates getrennten und aufsummierten Signalträger in zwei separate Spannungswerte, die miteinander verglichen werden können. Ausgegeben wird die entsprechende Differenzspannung am Ausgang 1007.

Die Erfindung besitzt grundsätzlich den Vorteil, dass sowohl zur Entfernungsmessung als auch zur Detektion der Bewegung des erfassten Objekts grundsätzlich der gleiche Detektionssensor verwendet werden kann.

Zur Bildung der Grauwertdifferenzen kann grundsätzlich eine beliebige Beleuchtungsart eingesetzt werden. Der Sensor kann in diesem Fall also aktiv oder passiv benutzt werden: Bei einem passiven Sensor ist keine eigene Lichtquelle vorhanden, sondern lediglich das Hintergrundlicht, das durch die natürliche Umgebung oder die vorhandene Beleuchtung des Raums vorgegeben wird. Der Vorteil, bei einem solchen passiven Sensor eine Lichtquelle einsparen zu können, bringt jedoch grundsätzlich den Nachteil mit sich, dass die Beleuchtung zunächst unbestimmt und somit unklar ist, welches Frequenzspektrum und welche Intensität vorliegt, bzw. ob eine zeitlich und räumlich konstante Ausleuchtung erfolgt. Da der Sensor in vorteilhafter Weise mit Infrarotlicht betrieben werden kann, kann es daher vorteilhaft sein, ihn als aktiven Sensor zu betreiben, das heißt mit einer definierten Lichtquelle.

In der Regel ist es vorteilhaft, gepulstes LED-Licht oder gepulstes Licht einer Laserdiode oder einer anderen Laserquelle zu verwenden, da zum einen der Energieverbrauch dadurch gesenkt werden kann, insbesondere bei LEDs die Lebenszeit höher ist und schließlich aber auch höhere Lichtintensitäten zur Verfügung gestellt werden können, die also eine verbesserte Detektion ermöglichen. Während der Integration der Ladungsträger bzw. der Aufnahme von Licht durch den Sensor ist die LED stets angeschaltet. Sie beginnt bereits zu leuchten, wenn der Integrationsprozess noch nicht angelaufen ist. Denkbar ist aber grundsätzlich auch während der Integration die LED gepulst zu betreiben. Um die Messung verbessern zu können, kann für die Auswertung auch ein Betrieb mit eingeschalteter und ausgeschalteter Lichtquelle aufgenommen und berücksichtigt werden.

Generell bezeichnet man mit Motion Blurr Bildstörungen durch bewegte Objekte. Im 3D-TOF-Imaging können bewegte Objekte dazu führen, dass die Korrelationsphase (bzw. Differenzkorrelationssamples DCS), welche für die Berechnung einer Distanz verwendet werden (typischerweise 4 DCS bzw. 8 CS) von Objektpunkten mit unterschiedlicher Distanz und/oder unterschiedlicher Reflexion aufgenommen werden. Motion Blurr verursachende Bewegungen können auf mehrere Arten auftreten:

Eine Rotation eines Objektes mit unterschiedlicher Reflexion der Oberfläche führt zum Beispiel zu Fehlkalkulationen der Distanz in denjenigen Pixeln, in welchen während der sequentiellen Aufnahme der DCS die Reflexion ändert. Abhängig von der Rotationsgeschwindigkeit und der Gesamtintegrationszeit sind es größere und kleinere Flächen, welche falsche Distanzwerte liefern (rechtes Bild in Figur 3).

Durch eine Seitwärtsbewegung spring die Distanz unter Umständen von einem endlichen Wert auf einen nicht mehr messbaren Wert (je nachdem, wie weit der Hintergrund entfernt ist und wie stark er reflektiert), sodass ein Teil der DCS, welche für dieselbe Distanzmessung verwendet werden sollen, korrumpiert wird (mittleres Bild in Figur 3).

Näher oder entfernt sich ein Objekt mit vergleichsweise hoher Geschwindigkeit während der Distanzmessung, so ändern sich gleichzeitig die Pixeldistanz sowie die Leistung des reflektierten modulierten lichtes, was zu Fehlkalkulationen der Distanz führt. Außerdem vergrößert oder verkleinert sich die von der Kamera gesehene Objektoberfläche, was, wie bei einer Seitwärtsbewegung zu Distanzsprüngen während der Bildaufnahme führt (linkes Bild in Figur 3).

Motion Blurr kann nicht vollständig unterdrückt werden. Allerdings sind Kameras mit kurzen Belichtungszeiten und solche, die gleichzeitig mehrere DCS aufnehmen können, wesentlich immuner gegen diesen Messartefakt, weil ihre Gesamtaufnahmezeit kurz ist. Da eine vollständige Motion-Blurr-Unterdrückung nicht möglich ist, sind Ansätze interessant, welche eine Detektion derjenigen Pixel ermöglichen, in den Motion Blurr auftritt. Ein Ansatz ist es, in Echtzeit die vorhandenen DCS Datensätze auf Merkmale zu prüfen, welche eine zuverlässige Aussage darüber zulassen, ob die berechnete Distanz vertrauenswürdig ist. Zum Beispiel nimmt die Unsyinmetrie der (theoretisch sich nur durch das Vorzeichen unterscheidenden) DCS00 und DCS2 zu, wenn sich die Leistung des reflektierten Lichtes ändert.

Schließlich gibt es den Ansatz, mit einer geeigneten Messung Motion Blurr direkt zu detektieren. Hierfür ist eine Grauwertedifferenzmessung hervorragend geeignet: Motion Blurr zeichnet sich in jedem Fall dadurch aus, dass sich die reflektierte Lichtleistung in denjenigen Pixeln ändert, in welchen der Effekt auftritt. Pointierter formuliert: Ist ein Pixel von Motion Blurr betroffen, so ändert sich zwingend dessen reflektierter Lichtleistung. Somit lässt sich mit einer Grauwertdifferenzmessung direkt feststellen, welche Pixel betroffen sind.

Die besten Resultate sind zu erwarten, wenn die Zeitdifferenz zwischen dem Start der Akquisition des ersten und dem Ende der Akquisition des zweiten Grauwertesamples gleich der Gesamtintegrationszeit der vier DCS ist. Eine mögliche Betriebssequenz (zur Distanzmessung) zwischen jeder Distanzframe Akquisition eine Aufnahme eines Differenzbildes einschieben. Je zwei aufeinander folgende Differenzbilder werden ausgewertet und alle Pixel, welche in einem der beiden Differenzbilder Lichtleistungsänderungen aufweisen, werden von der Distanzberechnung des dazwischen aufgenommenen Distanzframes ausgeschlossen. Dieser Betriebsmodus senkt die Framerate des Systems um 25 %. Ein zweiter möglicher Betriebsmodus besteht darin, häufiger, also zum Beispiel zwischen jeder DCS Akquisition ein Differenzbild aufzunehmen. Die Integrationszeit pro Differenzmessung kann identisch zur Integrationszeit pro DCS gesetzt werden. Wiederum können pro DCS sämtliche Pixel für die Distanzberechnung ignoriert werden, welche in einem unmittelbar vorher oder/und in einem unmittelbar danach aufgenommenen Differenzbild Leistungsänderungen anzeigen.

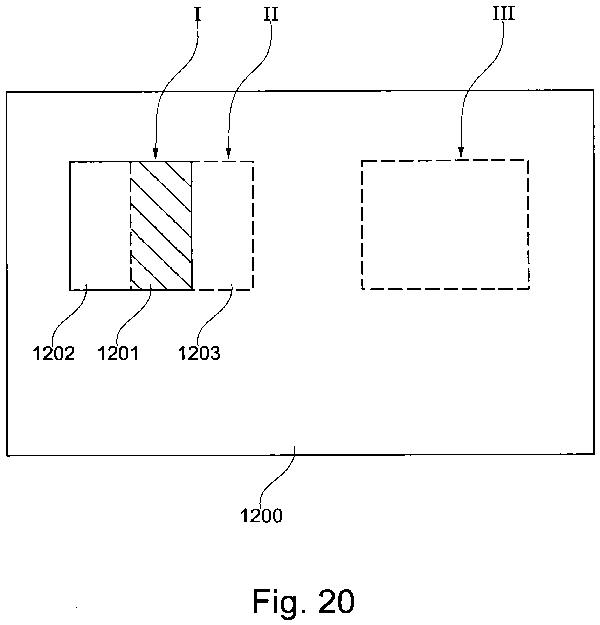

Figur 20 zeigt eine schematische Darstellung der Aufnahme eines Bildes 1200 des Objekts, einen Würfel, von dem eine Seite aufgenommen wird, ist zu sehen in den Positionen I, II und III. Das Objekt bewegt sich von Position I nach Position II und schließlich nach Position III in seitlicher Richtung vor dem Sensor. Beim Positionswechsel von I nach II ist im schraffierten Bereich 10201 stets ein Teil des Objektes in der gleichen Entfernung zum Sensor vorhanden. Wenn das Objekt eine homogene Farbgebung aufweist, wird für diesen Bereich der Sensor während es Positionswechsels von I nach II stets die gleiche Entfernung, aber auch die gleiche Grauwertdifferenz ausgeben. Für diesen Pixelbereich der Pixelmatrix wird also gewissermaßen nichts detektiert. Anders verhält es sich in den Bereichen 1202 und 1203 auf der linken bzw. rechten Seite des Bereichs 1201. Im Bereich 1202 vergrößert sich die Entfernung, da das Objekt an dieser Stelle verschwindet und im Bereich 1203 verkleinert sich die Entfernung, die gemessen wird, weil das Objekt an dieser Stelle erscheint, während es sich von Position I zu Position II bewegt. Des Weiteren ändern sich aber auch die in diesen Bereichen gemessenen Grauwertdifferenzen, weil davon auszugehen ist, dass das Objekt einen anderen Grauwert liefert als der Hintergrund. Der Bewegungssensor selbst wird also jeweils dem zeitlichen Verlauf der Grauwertdifferenz in bestimmten Zeitintervallen anzeigen, das heißt, bei der Bewegung von I nach II werden jeweils die sich bewegenden Kanten des erfassten Objekts sichtbar. Beim Wechsel in die Position III ist gegenüber den Positionen I und II kein gemeinsamer, überlappender Bereich, wie der Bereich 1201, vorhanden, sodass sich der Bereich III sowohl hinsichtlich der Entfernung als auch hinsichtlich der Grauwertdifferenz vom zuvor gemessenen Hintergrund an der Position III unterscheiden wird.

Bezugszeichenliste:

| 10 | TOF Entfernungsensor |
| 11 | Träger |
| 12 | Gehäuse |
| 13 | Elektronikeinrichtung |
| 20 | Strahlungsquelle |
| 21 | Ausgesandte Strahlung |
| 30 | Objekt |
| 31 | Reflektierte Strahlung |
| 40 | Empfangseinrichtung |
| 41 | Blende |
| 42 | Halbleitersubstrat |
| 43 | Elektronen-Lochpaare |
| 44 | Driftgate |
| 45 | Photoelektronen |
| 60 | Korrelationseinrichtung |
| 61 | Modulationsgate |
| 62 | Storagegate |
| 70 | Differenzbildungseinrichtung |
| 71 | Transfergate |
| 72 | Floating Diffusion |
| 80 | Berechnungseinrichtung |
| 100 | Erzeugung Rechtecksignal |
| 200 | Lichtaussendung |
| 300 | Reflexion |
| 400 | Lichtempfang |
| 500 | Bildung von 4 Korrelationssignalen |
| 600 | Korrelation |
| 700 | Differenzbildung |
| 800 | Berechnung |

EP 2 978 216 B1

| 801 | Fallunterscheidung |
| 802 | Berechnung mit konstanter linearer Funktionen |
| 900 | Ausgabe eines Entfernungsmasses |
| 101 | Modulationssignal |
| 201 | Ausgesendetes Lichtsignal |
| 401 | Empfangenes Lichtsignal (Beispiel) |
| 501 | Korrelationssignal 1 (ohne Phasenverschiebung) |
| 502 | Korrelationssignal 2 (Phasenverschiebung Pi) |
| 503 | Korrelationssignal 3 (Phasenverschiebung 1/2 Pi) |
| 504 | Korrelationssignal 4 (Phasenverschiebung (3/2 Pi) |
| 601 | Korrelationswert 1 (Beispiel) |
| 602 | Korrelationswert 2 (Beispiel) |
| 603 | Korrelationswert 3 (Beispiel) |
| 604 | Korrelationswert 4 (Beispiel) |
| 611 | Korrelationswert 1 |
| 622 | Korrelationswert 2 |
| 633 | Korrelationswert 3 |
| 644 | Korrelationswert 4 |
| 701 | Differenzkorrelationswert 1 |
| 711 | Differenzkorrelationswert 1 normiert |
| 702 | Differenzkorrelationswert 2 |
| 722 | Differenzkorrelationswert 2 normiert |
| 799 | Normierungsfunktion |
| 1000 | Anti-Blooming-Gate |
| 1001 | Photodiode |
| 1002a | Storagegates |
| 1002b | Storagegates |
| 1003a | Output Diffusion Nodes |
| 1003b | Output Diffusion Nodes |
| 1004a | Source Follower |
| 1004b | Source Follower |
| 1005 | Demodulator |
| 1200 | Bereich |
| 1201 | Bereich |
| 1202 | Bereich |
| 1203 | Bereich |

**Patentansprüche**

1. Verfahren zur Erkennung von Bewegungsunschärfe bei der sensorischen Erfassung eines Objektes, mithilfe von einem Bewegungsbildsensor zur Erfassung einer Bewegung eines Objekts, einer Reflexionsänderung, einer Emissionsänderung einer Strahlungsquelle oder dergleichen, umfassend:

    - eine Empfangseinrichtung

        - zum Empfang von vom Objekt reflektierter Strahlung einer Strahlungsquelle,
        - mit einer Pixelmatrix zur Aufnahme eines Pixelbildes,
        - mit wenigstens zwei 2-Tap-Demodulationspixeln, zur Umwandlung von empfangener Strahlung in Ladungsträger, wobei jedem 2-Tap-Demodulationspixel zwei Sammeleinheiten zur Sammlung erzeugter Ladungsträger und zur Speicherung von zwei unterschiedlichen Bildern zugeordnet sind,
        - eine Umschaltvorrichtung, zur Umschaltung zwischen den Sammeleinheiten zur Sammlung erzeugter Ladungsträger
        - eine Kontrolleinheit zur Steuerung und/oder Regelung der Umschaltvorrichtung zur Umschaltung nach einer vorgegebenen Zeitspanne,

    - eine Differenzbildungsvorrichtung zur Bildung einer Differenz zwischen den in den Sammeleinheiten gespeicherten Ladungsträgern,

- ein A/D-Wandler zur Wandlung des von der Differenzbildungsvorrichtung gebildeten Differenzwertes vorgesehen und die Differenzbildungsvorrichtung dem A/D-Wandler vorgeschaltet ist, um die Differenz analog zu bilden
- eine Auswerteeinheit zur Auswertung des vom A/D-Wandler ausgegebenen Differenzwertes,

wobei, die Kontrolleinheit wenigstens einen einstellbaren Timer zur Bestimmung einer Zeitspanne umfasst, wobei der wenigstens eine Timer dazu ausgebildet ist, die Zeitspanne zum Umschalten zwischen den Sammeleinheiten zu bestimmen und der Timer zur Erkennung von Bewegungsunschärfen bei der sensorischen Erfassung eines Objekts verwendet wird, wobei die Differenzbildungsvorrichtung zur Grauwertdifferenzbildung zur Unterscheidung von bewegten und statischen Objekten verwendet wird und wobei anhand der Grauwertdifferenzbildung auf eine Bewegungsunschärfe geschlossen wird, wenn sich innerhalb einer bestimmten Zeitspanne für eines der Demodulationspixel eine bestimmte Grauwertdifferenz ergibt, sodass das am Ausgang bereitgestellte Bild eines erfassten, bewegten Objekts die zeitliche Ableitung der Grauwert-Änderungen zeigt.

2. Verfahren zur Erkennung von Bewegungsunschärfe nach Anspruch 1, **dadurch gekennzeichnet, dass** ein Schwellwertfilter zur Datenreduktion verwendet wird, welcher dem A/D-Wandler vorgeschaltet und dazu ausgebildet ist, erst ab einem vorbestimmten Differenzwert diesen an den A/D-Wandler weiterzugeben.

3. Verfahren zur Erkennung von Bewegungsunschärfe nach einem der vorgenannten Ansprüche, **dadurch gekennzeichnet, dass** ein Schwellwertfilter zur Datenreduktion verwendet wird, welcher dem A/D-Wandler nachgeschaltet ist und dazu ausgebildet ist, erst ab einem vorbestimmten Differenzwert diesen weiterzugeben.

4. Verfahren zur Erkennung von Bewegungsunschärfe nach einem der vorgenannten Ansprüche, **dadurch gekennzeichnet, dass** der A/D-Wandler als 3-Werte-A/D-Wandler mit einstellbaren Schwellwerten verwendet wird, um anzugeben, ob ein bestimmtes Toleranzband verlassen wird und, bei Verlassen des Toleranzbandes, in welcher Richtung.

5. Verfahren zur Erkennung von Bewegungsunschärfe nach einem der vorgenannten Ansprüche, **dadurch gekennzeichnet, dass** ein öffenbarer und schließbarer Shutter zur Belichtung der Empfangsmatrix während einer Belichtungszeit in geöffnetem Zustand des Shutters verwendet wird, wobei insbesondere die Belichtungszeit von der Kontrolleinheit kontrollierbar ist.

6. Verfahren zur Erkennung von Bewegungsunschärfenach einem der vorgenannten Ansprüche, **dadurch gekennzeichnet, dass** der wenigstens eine Timer dazu verwendet wird, die Belichtungszeit und/oder eine Verzögerungszeit zwischen zwei aufeinanderfolgenden geöffneten Zuständen des Shutters zu bestimmen.

7. Verfahren zur Erkennung von Bewegungsunschärfenach einem der vorgenannten Ansprüche, **dadurch gekennzeichnet, dass** als Bewegungsbildsensor ein solcher verwendet wird, der

- eine Strahlungsquelle zur Aussendung von Strahlung umfasst
- zur Reflexion von ausgesendeter Strahlung am Objekt zurück zur Empfangseinrichtung
- wobei die Strahlungsquelle insbesondere dazu ausgebildet ist, von wenigstens einer der Kontrolleinheiten kontrolliert zu werden, um während wenigstens einer der beiden Beleuchtungsphasen den zu erfassenden Bereich zu beleuchten.

8. Verfahren zur Erkennung von Bewegungsunschärfe einem der vorgenannten Ansprüche, **dadurch gekennzeichnet, dass** der Bewegungsbildsensor auch als TOF-Entfernungssensor zur Messung der Entfernung zum Objekt verwendet wird.

9. Verfahren zur Erkennung von Bewegungsunschärfenach einem der vorgenannten Ansprüche, **dadurch gekennzeichnet, dass** eine Elektronikeinrichtung zur Erzeugung eines Modulationssignals zur Modulation der von der Strahlungsquelle ausgesendeten Strahlung verwendet wird, wobei das Modulationssignal bestimmte Phaseneigenschaften aufweist.

10. Verfahren zur Erkennung von Bewegungsunschärfe nach einem der vorgenannten Ansprüche, **dadurch gekennzeichnet, dass** die Strahlungsquelle zum Aussenden von Infrarotlicht und die Empfangseinrichtung zum Empfang von Infrarotlicht verwendet wird.

11. Verfahren zur Erkennung von Bewegungsunschärfe nach einem der vorgenannten Ansprüche, **dadurch gekennzeichnet, dass** eine der wenigstens einen Kontrolleinheit dazu verwendet wird, wenigstens zwei verschiedene Betriebsmodi des Bewegungsbildsensors zu betreiben, wobei

- im ersten Modus der Bildsensor als Bewegungsbildsensor zur Erfassung einer Bewegung des Objekts, einer Reflexionsänderung, einer Emissionsänderung einer Strahlungsquelle oder dergleichen arbeitet, um die Bewegung bzw. die Reflexions- bzw. Emissionsänderung mittels der Differenzbildungsvorrichtung in Abhängigkeit von der gebildeten zu erfassen, und
- im zweiten Modus der Bildsensor als TOF-Entfernungssensor arbeitet, um die Entfernung zu einem Objekt in Abhängigkeit vom Modulationssignal und/oder von den Phaseneigenschaften des Modulationssignals zu bestimmen.

12. Verfahren zur Erkennung von Bewegungsunschärfe nach einem der vorgenannten Ansprüche, **dadurch gekennzeichnet, dass** die Kontrolleinheit dazu verwendet wird, zwischen den Betriebsmodi umzuschalten, insbesondere abwechselnd umzuschalten.

13. Verfahren zur Erkennung von Bewegungsunschärfenach einem der vorgenannten Ansprüche, **dadurch gekennzeichnet, dass** die Umschaltvorrichtung und/oder wenigstens eine der Kontrolleinheiten dazu verwendet wird, im zweiten Betriebsmodus schneller umzuschalten als im ersten Betriebsmodus, insbesondere wenigstens um den Faktor 1000.

**Claims**

1. Method for the detection of motion blur during the sensor detection of an object by means of a moving image sensor for detecting the movement of an object, a change in reflection, a change in the emission of a source of radiation or the like, comprising:

- a receiving device
- for receiving the radiation of a source of radiation reflected by the object,
- with a pixel array for receiving a pixel image,
- with at least two 2-tap demodulation pixels for converting received radiation into charge carriers,
- wherein to each 2-tap demodulation pixel two collecting units are assigned for collecting the produced charge carriers and for storing two different images,
- a switching device for switching between the collecting units for collecting the produced charge carriers,
- a control unit for controlling and/or regulating the switching device for switching after a prespecified time period,
- a differential forming device for forming a difference between the charge carriers saved in the collecting units,
- an A/D converter for converting the differential value formed by the differential forming device and the differential forming device is arranged upstream of the A/D converter in order to form the differential analogously,
- an evaluating unit for evaluating the differential value emitted by the A/D converter,

wherein the control unit comprises at least one adjustable timer for determining the time period, wherein the at least one timer is designed to determine the time period for switching between the collecting units and the timer is used for detecting motion blur during the sensor detection of an object, wherein the differential image device is used for forming the grayscale differential to distinguish between moved and static objects and wherein with reference to the grayscale differential it is determined whether there is motion blur if within a specific time period for one of the demodulation pixels there is a specific grayscale differential so that the image provided at the output of a detected moved object shows the time derivative of the grayscale changes.

2. Method for detecting motion blur according to claim 1, **characterised in that** a threshold filter is used for data reduction, which filter is arranged upstream of the A/D-converter and is designed to transmit the differential value to the A/D converter only from prespecified differential value.

3. Method for detecting motion blur according to any of the preceding claims, **characterised in that** a threshold filter is used for data reduction, which is downstream of the A/D-converter and is designed to transmit the differential value only from a prespecified differential value.

4. Method for detecting motion blur according to any of the preceding claims, **characterised in that** the A/D converter is designed as a 3 value A/D-converter with adjustable thresholds in order to determine whether a specific tolerance band has been departed from and if the tolerance band has been departed from, in which direction this has taken place.

5. Method for detecting motion blur according to any of the preceding claims, **characterised in that** an openable and closable shutter is used for illuminating the receiving matrix during an illuminating period in the open state of the shutter, wherein in particular the illuminating period can be controlled by the control unit.

6. Method for detecting motion blur according to any of the preceding claims, **characterised in that** the at least one timer is used to determine the illumination period and/or a delay period between two consecutive open states of the shutter.

7. Method for detecting motion blur according to any of the preceding claims, **characterised in that** a moving image sensor is used which

- comprises a source of radiation for emitting radiation
- for reflecting emitted radiation on the object back to the receiving device
- wherein the source of radiation is designed in particular to be controlled by at least one of the control units in order to illuminate the area to be detected during at least one of the two illuminating phases.

8. Method for detecting motion blur according to any of the preceding claims, **characterised in that** the moving image sensor is also designed as a TOF distance sensor for measuring the distance from the object.

9. Method for detecting motion blur according to any of the preceding claims, **characterised in that** an electronic device is used for producing a modulation signal for modulating the radiation emitted by the source of radiation, wherein the modulation signal has specific phase properties.

10. Method for detecting motion blur according to any of the preceding claims, **characterised in that** the source of radiation is used for emitting infrared light and the receiving device is used for receiving infrared light.

11. Method for detecting motion blur according to any of the preceding claims, **characterised in that** one of the at least one control units is used to operate at least two different operating modes of the moving image sensor, wherein

- in the first mode the image sensor operates as a moving image sensor for detecting the movement of the object, a change in the reflection, a change in the emission of a source of radiation or the like, in order to detect the movement or the change in the reflection or emission by means of the differential forming device as a function of the one formed, and
- in the second mode the image sensor operates as a TOF distance sensor, in order to determine the distance from an object as a function of the modulation signal and/or the phase properties of the modulation signal.

12. Method for detecting motion blur according to any of the preceding claims, **characterised in that** the control unit is used to switch between operating modes, in particular alternately.

13. Method for detecting motion blur according to any of the preceding claims, **characterised in that** the switching device and/or at least one of the control units is designed to switch more rapidly in the second operating mode than in the first operating mode, in particular by at least a factor of 1000.

**Revendications**

1. Procédé de détection du flou de mouvement lors de la détection par capteur d'un objet, à l'aide d'un capteur d'image de mouvement destiné à capter le mouvement d'un objet, une variation de réflexion, une variation d'émission d'une source de rayonnement ou quelque chose de similaire, comprenant :

- un dispositif de réception

- destiné à recevoir le rayonnement d'une source de rayonnement réfléchi par l'objet,
- avec une matrice de pixels destinée à enregistrer une image pixellisée,
- avec au moins deux pixels de démodulation à deux prises (2-tap pixel), destinés à convertir le rayonnement reçu en porteurs de charge, deux unités collectrices destinées à collecter les porteurs de charge produits et à mettre en mémoire deux images différentes étant associées à chaque pixel de démodulation à deux dérivations,

- un dispositif de basculement pour le basculement entre les unités collectrices destinées à collecter les porteurs de charge produits,
- une unité de contrôle destinée pour commander et/ou réguler le dispositif de basculement pour le basculement après un laps de temps prédéfini,

- un dispositif de formation de différence pour la formation d'une différence entre les porteurs de charge mis en mémoire dans les unités collectrices,
- un convertisseur analogique/numérique prévu pour convertir la valeur de différence formée par le dispositif de formation de différence, et le dispositif de formation de différence étant monté en amont du convertisseur analogique/numérique pour former la différence de manière analogique,
- une unité d'analyse destinée à analyser la valeur de différence délivrée par le convertisseur analogique/numérique,

l'unité de contrôle comportant au moins un minuteur réglable pour la détermination d'un laps de temps, l'au moins un minuteur étant conçu pour déterminer le laps de temps pour le basculement entre les unités collectrices et le minuteur étant utilisé pour détecter des flous de mouvement lors de la détection par capteur d'un objet, le dispositif de formation de différence étant utilisé pour former une différence de valeur de gris afin de différencier des objets en mouvement et statiques, et sur la base de la formation de différence de valeur de gris il en est déduit un flou de mouvement si une différence de valeur de gris définie est obtenue pendant un laps de temps défini pour un des pixels de démodulation, de sorte que l'image fournie à la sortie d'un objet en mouvement capté présente la dérivée temporelle des variations de valeur de gris.

2. Procédé de détection du flou de mouvement selon la revendication 1, **caractérisé en ce qu'**un filtre de valeur seuil est utilisé pour la réduction des données, lequel est monté en amont du convertisseur analogique/numérique et est conçu pour ne transmettre la valeur de différence au convertisseur analogique/numérique qu'à partir d'une valeur de différence prédéfinie.

3. Procédé de détection du flou de mouvement selon l'une des revendications précédentes, **caractérisé en ce qu'**un filtre de valeur seuil est utilisé pour la réduction des données, lequel est monté en aval du convertisseur analogique/numérique et est conçu pour ne transmettre la valeur de différence qu'à partir d'une valeur de différence prédéfinie.

4. Procédé de détection du flou de mouvement selon l'une des revendications précédentes, **caractérisé en ce que** le convertisseur analogique/numérique est utilisé comme convertisseur analogique/numérique à trois valeurs avec des valeurs seuil réglables, afin d'indiquer si une bande de tolérance définie est quittée et, si la bande de tolérance est quittée, dans quelle direction.

5. Procédé de détection du flou de mouvement selon l'une des revendications précédentes, **caractérisé en ce qu'**un obturateur pouvant être ouvert et fermé est utilisé pour exposer la matrice de réception pendant une durée d'exposition quand l'obturateur est ouvert, la durée d'exposition en particulier pouvant être contrôlée par l'unité de contrôle.

6. Procédé de détection du flou de mouvement selon l'une des revendications précédentes, **caractérisé en ce que** le au moins un minuteur est utilisé pour déterminer le temps d'exposition et/ou un temps de retard entre deux états ouverts successifs de l'obturateur.

7. Procédé de détection du flou de mouvement selon l'une des revendications précédentes, **caractérisé en ce qu'**on utilise comme capteur de mouvement un capteur qui

- comprend une source de rayonnement destinée à émettre un rayonnement
- pour la réflexion d'un rayonnement émis sur l'objet et retour en direction du dispositif de réception
- la source de rayonnement étant conçue en particulier pour être contrôlée par au moins une des unités de contrôle afin d'éclairer la zone à capter pendant au moins une des deux phases d'éclairage.

8. Procédé de détection du flou de mouvement selon l'une des revendications précédentes, **caractérisé en ce que** le capteur d'image de mouvement est utilisé également comme capteur de distance en temps de vol pour mesurer la distance par rapport à l'objet.

9.  Procédé de détection du flou de mouvement selon l'une des revendications précédentes, **caractérisé en ce qu'**un dispositif électronique est utilisé pour générer un signal de modulation pour la modulation du rayonnement émis par la source de rayonnement, le signal de modulation présentant des propriétés de phase définies.

10. Procédé de détection du flou de mouvement selon l'une des revendications précédentes, **caractérisé en ce que** la source de rayonnement est utilisée pour envoyer une lumière infrarouge et le dispositif de réception est utilisé pour recevoir la lumière infrarouge.

11. Procédé de détection du flou de mouvement selon l'une des revendications précédentes, **caractérisé en ce qu'**une des au moins une unité de contrôle est utilisée pour faire fonctionner au moins deux modes de fonctionnement différents du capteur d'image de mouvement,

   - dans le premier mode, le capteur d'image fonctionnant comme un capteur d'image de mouvement pour capter un mouvement de l'objet, une variation de réflexion, une variation d'émission d'une source de rayonnement ou quelque chose de similaire, afin de capter le mouvement ou la variation de réflexion ou d'émission au moyen du dispositif de formation de différence en fonction de la différence formée, et
   - dans le deuxième mode, le capteur d'image fonctionnant comme un capteur de distance en temps de vol afin de déterminer la distance par rapport à un objet en fonction du signal de modulation et/ou des propriétés de phase du signal de modulation.

12. Procédé de détection du flou de mouvement selon l'une des revendications précédentes, **caractérisé en ce que** l'unité de contrôle est utilisée pour effectuer un basculement entre les modes de fonctionnement, en particulier pour effectuer un basculement en alternance.

13. Procédé de détection du flou de mouvement selon l'une des revendications précédentes, **caractérisé en ce que** le dispositif de basculement et/ou au moins une des unités de contrôle sont utilisés pour effectuer un basculement dans le deuxième mode de fonctionnement plus rapidement que dans le premier mode de fonctionnement, en particulier au moins du facteur 1 000.

Fig. 1

Fig. 2

Fig. 3

101

$\Phi_{LED}$ 201

1
0
0        $2\pi$        t

401

$\Phi/\Phi_{max}$

1
0
0        $2\pi$        t

# Fig. 4

501

$Trig_{li,\,0\pi}$

1
0
0        $2\pi$        t

502

$Trig_{re,\,\pi}$

1
0
0        $2\pi$        t

503

$Trig_{li,\,\pi/2}$

1
0
0        $2\pi$        t

504

$Trig_{re,\,3/2\pi}$

1
0
0        $2\pi$        t

# Fig. 5

Fig. 6

Fig. 7

Fig. 8

Fig. 9

$\Phi/\Phi_{max}$ 400

$\Phi/\Phi_{max}$ 400

$\text{Trig}_{ll,\,\pi/2}$ 503

$\text{Trig}_{r0,\,3/2\pi}$ 504

$I_l/I_{l,\,max}$ 603

$I_r/I_{r,\,max}$ 604

$Q^{SG}_{ll,\,\pi/2}$ 633

$Q^{SG}_{re,\,3/2\pi}$ 644

**Fig. 10**

**Fig. 11**

$\Delta Q^{SG}_{\pi/2,\,-3/2\pi}$ 702

**Fig. 12**

$\|\Delta Q^{SG}_{\pi/2,\,-3/2\pi}\|$ 722

**Fig. 13**

799

1/2

0

0                    2π

Δφ

# Fig. 14

b)

8

$\|c_0\|+3$   $-\|c_1\|+4$

$\|c_0\|+3$   $-\|c_1\|+2$

$-\|c_0\|+1$   $-\|c_1\|+2$

1

$-\|c_0\|+1$

$\|c_1\|$

0

0                    2π   Δφ

| $c_0>0$ | $c_0<0$ | $c_0<0$ | $c_0>0$ |
|---|---|---|---|
| $c_1>0$ | $c_1>0$ | $c_1<0$ | $c_1<0$ |

a)

1

$\|c_1\|$

0

0                    2π   Δφ

$\|c_0\|$

| $c_0>0$ | $c_0<0$ | $c_0<0$ | $c_0>0$ |
|---|---|---|---|
| $c_1>0$ | $c_1>0$ | $c_1<0$ | $c_1<0$ |

c)

8

$\|c_0\|+\|c_1\|+7$

$\|c_0\|-\|c_1\|+5$

$-\|c_0\|-\|c_1\|+3$

1

$-\|c_0\|+\|c_1\|+1$

0

0                    2π   Δφ

| $c_0>0$ | $c_0<0$ | $c_0<0$ | $c_0>0$ |
|---|---|---|---|
| $c_1>0$ | $c_1>0$ | $c_1<0$ | $c_1<0$ |

d)

1

$(\|c_0\|+\|c_1\|+7)\pi/4$

$(\|c_0\|-\|c_1\|+5)\pi/4$

$(-\|c_0\|-\|c_1\|+3)\pi/4$

$(-\|c_0\|+\|c_1\|+1)\pi/4$

0

0                    2π   Δφ

| $c_0>0$ | $c_0<0$ | $c_0<0$ | $c_0>0$ |
|---|---|---|---|
| $c_1>0$ | $c_1>0$ | $c_1<0$ | $c_1<0$ |

# Fig. 15

Fig. 16

Fig. 17

Fig. 18

Fig. 19

I    II                III

1202  1201    1203

1200

# Fig. 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Robust Optical Time-of-Flight Range Imaging Based on Smart Pixel Structures. **BÜTTGEN B et al.** IEEE TRANSACTIONS ON CIRCUITS AND SYSTEMS I: REGULAR PAPERS. IEEE, 01. Juli 2008, vol. 55, 1512-1525

- A 16 X 16 Pixel Distance Sensor With In-Pixel Circuitry That Tolerates 150 klx of Ambient Light. **GERALD ZACH et al.** IEEE JOURNAL OF SOLID-STATE CIRCUITS. IEEE SERVICE CENTER, 01. Juli 2010, vol. 45, 1345-1353